(19) Europäisches Patentamt
European Patent Office
Office européen des brevets

(11) **EP 0 837 910 B1**

(12) **FASCICULE DE BREVET EUROPEEN**

(45) Date de publication et mention de la délivrance du brevet:
**18.02.2004 Bulletin 2004/08**

(21) Numéro de dépôt: **97923149.5**

(22) Date de dépôt: **06.05.1997**

(51) Int Cl.[7]: **C08L 95/00**, C08K 3/32, C08K 3/30, C08K 5/42, C08K 5/5317, C08K 3/00, C08K 5/00

(86) Numéro de dépôt international:
**PCT/FR1997/000812**

(87) Numéro de publication internationale:
**WO 1997/043342 (20.11.1997 Gazette 1997/50)**

(54) **PROCEDE DE PREPARATION DE COMPOSITIONS BITUME/POLYMERE ET LEUR UTILISATION**

VERFAHREN ZUR HERSTELLUNG VON BITUMEN-POLYMER-ZUSAMMENSETZUNGEN UND IHRE VERWENDUNG

METHOD FOR PREPARING BITUMEN/POLYMER COMPOSITIONS AND USE THEREOF

(84) Etats contractants désignés:
**AT BE CH DE DK ES FI FR GB GR IE IT LI LU MC NL PT SE**

(30) Priorité: **10.05.1996 FR 9605828**

(43) Date de publication de la demande:
**29.04.1998 Bulletin 1998/18**

(73) Titulaire: **TotalFinaElf France**
**92800 Puteaux (FR)**

(72) Inventeurs:
- **PLANCHE, Jean-Pascal**
  **F-38540 Saint Just Chaleyssin (FR)**
- **TURELLO, Patrick**
  **F-69340 Francheville (FR)**
- **LACOUR, Claude**
  **F-38200 Vienne (FR)**

(74) Mandataire: **Jolly, Jean-Pierre**
**Cabinet Jolly**
**54, rue de Clichy**
**75009 Paris (FR)**

(56) Documents cités:
**WO-A-94/22958**
**WO-A-95/28446**
**US-A- 4 650 820**
**US-A- 5 306 750**
**US-A- 5 331 028**

- **PATENT ABSTRACTS OF JAPAN vol. 95, no. 012 & JP 07 331082 A (SAKAI CHEM IND CO LTD), 19 Décembre 1995,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention a trait à un procédé de préparation de compositions bitume/polymère à très faible susceptibilité thermique. Elle se rapporte encore à l'application des compositions obtenues à la production de liants bitume/polymère pour la réalisation de revêtements et en particulier de revêtements routiers, d'enrobés ou encore de revêtements d'étanchéité.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

- point de ramollissement, exprimé en °C et déterminé par l'essai Bille et Anneau défini par la norme NF T 66008,
- point de fragilité ou point de Fraass, exprimé en °C et déterminé selon la norme IP 80/53,
- pénétrabilité, exprimée en 1/10 de mm et déterminée selon la norme NF T 66004,
- caractéristiques rhéologiques en traction déterminées selon la norme NF T 46002 et comportant les grandeurs :
  - . contrainte au seuil $\sigma_s$ en bars,
  - . allongement au seuil $\varepsilon_s$ en %,
  - . contrainte à la rupture $\sigma_r$ en bars,
  - . allongement à la rupture $\varepsilon_r$ en %.

On peut également obtenir une indication de la susceptibilité thermique des compositions bitumineuses à partir d'une corrélation entre la pénétrabilité (en abrégé pen) et le point de ramollissement (en abrégé TBA) desdites compositions connue sous le nom d'indice de PFEIFFER (en abrégé IP).

Cet indice se calcule par la relation :

$$IP = \frac{20 - 500\ A}{1 + 50\ A}$$

dans laquelle A est la pente de la droite représentée par l'équation :

$$A = \frac{\log_{10} 800 - \log_{10} pen}{TBA - 25}$$

La susceptibilité thermique de la composition bitumineuse est d'autant plus faible que la valeur de l'indice de PFEIFFER est plus grande ou, ce qui revient au même, que la valeur de la grandeur A est plus faible. Pour les bitumes classiques l'indice de PFEIFFER prend des valeurs se situant aux alentours de zéro.

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume/polymère ayant des qualités mécaniques améliorées par rapport à celles des bitumes seuls.

L'incorporation de polymères oléfiniques fonctionnalisés par des groupements époxy ou carboxyliques à des compositions bitumineuses consistant en un ou plusieurs bitumes ou constituées d'un ou plusieurs bitumes et d'un ou plusieurs polymères exempts de tels groupements, conduit à l'obtention de compositions bitume/polymère, dont la consistance (augmentation du point de ramollissement Bille et Anneau), la susceptibilité thermique (augmentation de l'indice de PFEIFFER) et les propriétés mécaniques en traction sont notablement améliorées.

De telles compositions bitume/polymère, qui renferment des polymères oléfiniques fonctionnalisés par des groupements époxy ou carboxyliques, sont notamment décrites dans les références US-A-4650820, US-A-5306750 et US-A-5331028, ainsi que dans la demande de brevet français déposée par la demanderesse le 10.11.1994 sous le numéro 9413537. Ainsi, la référence US-A-4650820 concerne une composition bitume/polymère renfermant, en poids, 95 % à 99 % d'un bitume ayant une pseudoviscosité à 30°C située dans l'intervalle 200 à 1000 secondes et 1 % à 5 % d'un terpolymère constitué de 88 % à 98,7 % molaire d'unités dérivant de l'éthylène, de 1 % à 10 % molaire d'unités dérivant d'au moins un acrylate ou méthacrylate d'un alkyle en $C_1$ à $C_6$ et de 0,3 % à 3 % d'unités dérivant de l'anhydride maléique.

La référence US-A-5306750 décrit une composition bitume/polymère consistant en un produit de réaction obtenu en mettant en contact, à des températures de 125°C à 250°C et sous agitation pendant une durée de l'ordre

de 3 heures à 48 heures, un bitume avec un copolymère d'éthylène renfermant, en poids, 0,1 % à 20 % de groupements glycidyles, la quantité du copolymère représentant 0,05 % à 20 % du poids de la composition. En particulier, le copolymère d'éthylène à groupements glycidyles est un copolymère statistique d'éthylène, de 0,5 à 15 % en poids d'un monomère à groupement glycidyle, notamment acrylate ou méthacrylate de glycidyle, et de 0 à 50 % en poids d'un monomère vinylique sans groupement glycidyle tel qu'un ester vinylique, comme l'acétate de vinyle, ou un acrylate ou méthacrylate d'alkyle. La référence US-A-5331028 concerne une composition bitume/polymère d'un type comparable à celle décrite dans la référence US-A-5306750, mais renfermant en outre 0,3 % à 20 % en poids d'un copolymère séquence de styrène et d'un diène conjugué, par exemple copolymère séquencé de styrène et de butadiène, ayant une masse moléculaire moyenne en poids allant de 100000 à 1000000. La demande de brevet français n° 9413537 a pour objet une composition bitume/polymère obtenue en mettant en contact, entre 100°C et 230°C et sous agitation, un bitume ou mélange de bitumes, un élastomère réticulable au soufre tel que, notamment, un copolymère séquencé de styrène et d'un diène conjugué, un polymère oléfinique à groupements fonctionnels époxy ou carboxyliques (COOH) et un agent de couplage donneur de soufre.

On a maintenant trouvé que l'effet bénéfique des polymères oléfiniques à groupements fonctionnels époxy ou COOH sur l'amélioration des caractéristiques mécaniques et rhéologiques, notamment consistance, susceptibilité thermique et propriétés mécaniques en traction, des compositions bitume/polymère renfermant ces polymères fonctionnels pouvait être encore substantiellement amélioré en soumettant lesdites compositions, à l'issue de leur obtention, à un traitement par un adjuvant particulier du type acide ou anhydride d'acide.

L'invention a donc pour, objet un procédé de préparation de compositions bitume/polymère, présentant, entre autres, une très faible susceptibilité thermique, dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,01 % à 20 %, de préférence 0,05 % à 10 % et plus spécialement 0,1 % à 6 %, d'au moins un polymère oléfinique porteur de groupements fonctionnels époxy ou COOH pour former un produit de réaction dit composante bitume/polymère, ledit procédé se caractérisant en ce qu'à la composante bitume/polymère, maintenue à des températures comprises entre 100°C et 230°C et sous agitation, on incorpore 0,005 % à 6 % et de préférence 0,01 % à 3 %, en poids du bitume ou mélange de bitumes, d'un adjuvant acide et l'on maintient le milieu réactionnel ainsi formé à des températures comprises entre 100°C et 230°C et sous agitation pendant une durée d'au moins 10 minutes pour produire la composition bitume/polymère, ledit adjuvant acide étant constitué d'un ou plusieurs composés choisis dans le groupe formé par les acides phosphoriques, les acides boriques, l'acide sulfurique, les anhydrides desdits acides, l'acide chlorosulfurique, les acides polyphosphoriques, les acides phosphoniques de formule

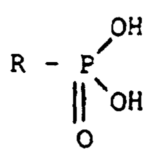

et les acides de formule $R\text{-}(COO)_t\text{-}SO_3H$ avec dans lesdites formules t prenant la valeur zéro ou un et R désignant un radical hydrocarboné monovalent choisi dans le groupe constitué des radicaux hydrocarbonés monovalents acycliques en $C_1$ à $C_{16}$ et des radicaux hydrocarbonés cycliques monovalents renfermant 4 à 12 atomes de carbone cycliques et éventuellement substitués par des radicaux hydrocarbonés monovalents acycliques en $C_1$ à $C_{16}$.

En particulier, l'adjuvant acide peut être pris parmi les composés $H_3PO_4$, $P_2O_5$, $H_3BO_3$, $B_2O_3$, $H_2SO_4$, $SO_3$ et $HSO_3Cl$ ou encore parmi les acides polyphosphoriques, les mélanges d'au moins un acide polyphosphorique et d'acide sulfurique, les mélanges d'au moins un acide polyphosphorique et d'au moins l'un desdits acides $R\text{-}(COO)_t\text{-}SO_3H$, les mélanges d'acide sulfurique et d'au moins l'un des acides $R\text{-}(COO)_t\text{-}SO_3H$ et les mélanges d'acide sulfurique avec au moins un acide polyphosphorique et au moins l'un des acides $R\text{-}(COO)_t\text{-}SO_3H$. Lorsque l'adjuvant acide est à base d'un ou plusieurs acides polyphosphoriques, il peut renfermer, en poids, 5 % à 100 % et plus particulièrement 20 % à 100 % d'un ou plusieurs acides polyphosphoriques et 95 % à 0 % et plus particulièrement 80 % à 0 % d'au moins un composé choisi dans le groupe formé de l'acide sulfurique et des acides $R\text{-}(COO)_t\text{-}SO_3H$ . Tout spécialement ce type d'adjuvant acide consiste en une association constituée, en poids, de 20 % à 95 % et plus particulièrement de 40 % à 90 % d'un ou plusieurs acides polyphosphoriques et de 80 % à 5 % et plus particulièrement de 60 % à 10 % d'acide sulfurique et/ou d'acide méthane sulfonique.

Lorsque l'adjuvant acide est constitué d'une pluralité de composés acides, lesdits composés peuvent être incorporés à la composante bitume/polymère soit en mélange soit séparément.

Les acides polyphosphoriques, utilisables dans le procédé selon l'invention, sont des composés de formule brute $P_qH_rO_s$ dans laquelle q, r et s sont des nombres positifs tels que $q \geq 2$ et notamment allant de 3 à 20 ou plus et

que 5q+r-2s=0.

En particulier, lesdits acides polyphosphoriques peuvent être des composés linéaires de formule brute $P_qH_{q+2}O_{3q+1}$ correspondant à la formule développée

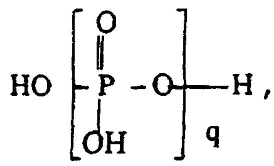

où q a la signification donnée ci-dessus ou encore être des produits de structure bidimensionnelle voire même tridimensionnelle. Tous ces acides polyphosphoriques peuvent être considérés comme des produits de polycondensation par chauffage de l'acide métaphosphorique aqueux.

Les acides de formule $R\text{-}(COO)_t\text{-}SO_3H$ sont soit des acides sulfoniques de formule $R\text{-}SO_3H$, lorsque t=0, ou bien des acides de formule $R\text{-}COO\text{-}SO_3H$, lorsque t=1. Les acides de formule $R\text{-}COO\text{-}SO_3H$ peuvent être considérés comme des adduits (adducts) d'acides monocarboxyliques R-COOH et de $SO_3$ ou encore comme des anhydrides mixtes d'acides monocarboxyliques de formule R-COOH et d'acide sulfurique.

Le radical monovalent hydrocarboné R apparaissant dans la formule des acides phosphoniques

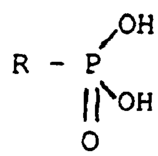

et dans la formule des acides $R\text{-}(COO)_t\text{-}SO_3H$ est choisi, comme indiqué précédemment, parmi les radicaux hydrocarbonés monovalents acycliques en $C_1$ à $C_{16}$ et les radicaux hydrocarbonés monovalents cycliques qui renferment 4 à 12 atomes de carbone cycliques et qui sont éventuellement substitués par des radicaux hydrocarbonés monovalents acycliques en $C_1$ à $C_{16}$. Ainsi, le radical R de type acyclique peut consister, notamment, en un radical alkyle linéaire ou ramifié en $C_1$ à $C_{16}$, par exemple tel que méthyle, éthyle, propyle, butyle, hexyle, heptyle, octyle, décyle, dodécyle ou encore tétradécyle. Le radical R de type cyclique peut consister, notamment, en un radical cycloalkyle en $C_4$ à $C_{12}$ et plus particulièrement en $C_5$ à $C_8$ tel que cyclopentyle, cyclohexyle, cycloheptyle ou cyclooctyle ou bien en un radical monovalent aromatique, qui renferme 6 atomes de carbone cycliques et qui peut être éventuellement substitué par un radical alkyle linéaire ou ramifié en $C_1$ à $C_{16}$, comme, par exemple, un radical phényle, tolyle, décylphényle, dodécylphényle, tétradécylphényle.

Des exemples d'acides sulfoniques de formule $R\text{-}SO_3H$ utilisables dans le procédé selon l'invention sont tels que l'acide méthane sulfonique, l'acide éthanesulfonique, l'acide propanesulfonique, l'acide benzènesulfonique, l'acide toluènesulfonique, l'acide décylbenzènesulfonique, l'acide dodécylbenzènesulfonique et l'acide tétradécylbenzènesulfonique.

Des exemples d'acides phosphoniques de formule

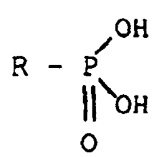

utilisables dans le procédé selon l'invention sont tels que l'acide méthylphosphonique, l'acide éthylphosphonique, l'acide propylphosphonique, l'acide butylphosphonique et l'acide phénylphosphonique.

Comme acides de formule $R\text{-}COO\text{-}SO_3H$, on peut mentionner les acides $CH_3\text{-}COO\text{-}SO_3H$ et $CH_3\text{-}CH_2\text{-}COO\text{-}SO_3H$, qui sont les adduits de $SO_3$ avec respectivement l'acide acétique et l'acide propionique.

Les polymères oléfiniques porteurs de groupements fonctionnels époxy ou COOH, dont l'un au moins est incorporé au bitume ou mélange de bitumes pour former la composante bitume/polymère, consistent, avantageusement, en copolymères oléfiniques renfermant, en poids, x % de motifs issus de l'éthylène ou du propylène, y % de motifs issus d'un ou plusieurs monomères A de formule

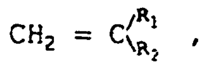

z % de motifs issus d'au moins un monomère B de formule

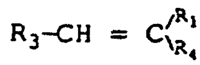

et v % de motifs issus d'un ou plusieurs monomères C différents des monomères A et B, avec, dans ces formules, $R_1$ désignant H, $CH_3$ ou $C_2H_5$, $R_2$ représentant un radical $-COOR_5$, $-OR_5$ ou $-OOCR_6$ avec $R_5$ désignant un radical alkyle en $C_1$ à $C_{10}$ et de préférence en $C_1$ à $C_6$ et $R_6$ représentant H ou un radical alkyle en $C_1$ à $C_3$, $R_3$ désignant H, COOH ou $COOR_5$, $R_5$ ayant la définition précitée, et $R_4$ désignant un radical -COOH,

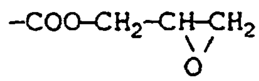 ou 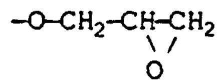

et x, y, z et v étant des nombres tels que $40 \leq x \leq 99{,}9$, $0 \leq y \leq 50$, $0{,}1 \leq z \leq 20$ et $0 \leq v \leq 15$ avec $x+y+z+v = 100$.

De préférence, dans les copolymères précités x, y, z et v sont tels que $50 \leq x \leq 99{,}5$, $0 \leq y \leq 40$, $0{,}5 \leq z \leq 15$ et $0 \leq v \leq 10$ avec $x+y+z+v = 100$.

Les monomères A de formule

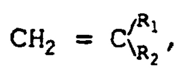

qui fournissent dans le copolymère oléfinique des motifs

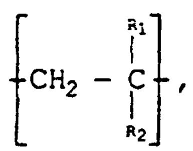

sont en particulier choisis parmi le formiate de vinyle, l'acétate de vinyle, le propionate de vinyle, le butyrate de vinyle, les éthers de vinyle $CH_2 = CH-O-R_5$ où $R_5$ est un radical alkyle en $C_1$ à $C_{10}$ et de préférence en $C_1$ à $C_6$ tel que méthyle, éthyle, propyle, butyle, les acrylates et méthacrylates d'alkyle respectivement de formule $CH_2 = CH-COOR_5$ et

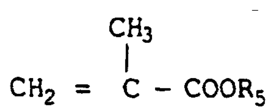

où $R_5$ a la signification donnée ci-dessus.

Les monomères B de formule

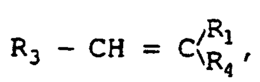

qui fournissent dans le copolymère oléfinique des motifs

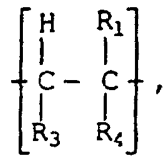

sont en particulier choisis parmi l'acide maléique et son anhydride, l'acide acrylique, l'acide méthacrylique, les maléates acides d'alkyle de formule HOOC-CH = CH-COOR$_7$ où R$_7$ est un radical alkyle en C$_1$ à C$_6$ tel que méthyle, éthyle, propyle, butyle, les acrylates et méthacrylates de glycidyle de formule

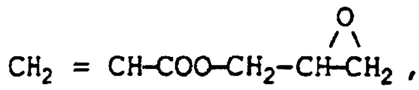

et

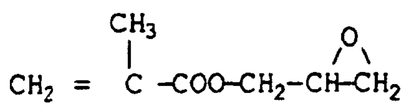

respectivement, l'alcool vinylique et le vinyléther de glycidyle de formule

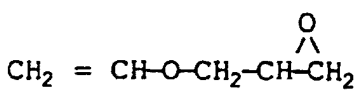

Les monomères C dont la présence dans le copolymère oléfinique est facultative, sont des monomères polymérisables par voie radicalaire différents des monomères A et B, comme, par exemple, CO, $SO_2$ et acrylonitrile.

En particulier, les copolymères oléfiniques porteurs de groupements fonctionnels époxy ou COOH sont choisis parmi :

(a) les copolymères statistiques d'éthylène et d'un monomère B choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(b) les terpolymères statistiques d'éthylène, d'un monomère A choisi parmi l'acétate de vinyle et les acrylates ou méthacrylates d'alkyle à reste alkyle en $C_1$ à $C_6$ tel que méthyle, éthyle, propyle, butyle, hexyle, et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et
(c) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques d'éthylène et d'acétate de vinyle ou d'éthylène et d'acrylate ou de méthacrylate d'alkyle à reste alkyle en $C_1$ à $C_6$ tel que méthyle, éthyle, propyle, butyle, hexyle, qui renferment, en poids, 40 % à 99,7 % et de préférence 50 % à 99 % d'éthylène, lesdits copolymères greffés renfermant, en poids, 0,5 % à 15 % de motifs greffés issus du monomère B.

Sont particulièrement préférés, les copolymères oléfiniques choisis parmi :

(i) les terpolymères statistiques d'éthylène, d'acrylate ou méthacrylate d'alkyle à reste alkyle en $C_1$ à $C_6$ tel que méthyle, éthyle, butyle, et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(ii) les terpolymères statistiques d'éthylène, d'acrylate ou méthacrylate d'alkyle à reste alkyle en $C_1$ à $C_6$ tel que

méthyle, éthyle, butyle, et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ;

(iii) les polyéthylènes basse densité greffés anhydride maléique et les polypropylènes greffés anhydride maléique, qui renferment, en poids, 0,5 % à 15 % de motifs greffés issus de l'anhydride maléique ;

(iv) les polyéthylènes basse densité greffés acrylate ou méthacrylate de glycidyle et les polypropylènes greffés acrylate ou méthacrylate de glycidyle, qui renferment, en poids, 0,5 % à 15 % de motifs greffés issus du dérivé glycidyle.

Avantageusement, les copolymères oléfiniques porteurs de groupements fonctionnels époxy ou COOH, utilisés pour produire la composante bitume/polymère, ont des masses moléculaires telles que l'indice de fluidité desdits copolymères, déterminé selon la norme ASTM D 1238 (essai réalisé à 190°C sous une charge de 2,16 kg), a une valeur, exprimée en grammes par 10 minutes, comprise entre 0,3 et 3000 et de préférence entre 0,5 et 900.

Le bitume ou mélange de bitumes, que l'on utilise pour la mise en oeuvre du procédé selon l'invention, est choisi avantageusement parmi les divers bitumes qui possèdent une viscosité cinématique à 100°C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$. Ces bitumes peuvent être des bitumes de distillation directe ou de distillation sous pression réduite ou encore des bitumes soufflés ou semi-soufflés, des résidus de désasphaltage au propane ou au pentane, des résidus de viscoréduction, voire même certaines coupes pétrolières ou des mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25°C, définie suivant la norme NF T 66004, comprise entre 5 et 800 et de préférence entre 10 et 400.

Outre le polymère oléfinique fonctionnalisé par des groupements époxy ou COOH, la composante bitume/polymère, que l'on traite par l'adjuvant acide, peut encore renfermer un ou plusieurs polymères additionnels différents dudit polymère oléfinique fonctionnalisé, le ou lesdits polymères additionnels étant en particulier des élastomères et notamment des élastomères réticulables au soufre. Avantageusement, ces élastomères sont choisis parmi les copolymères statistiques ou séquences de styrène et d'un diène conjugué tel que butadiène, isoprène, chloroprène, butadiène carboxylé, isoprène carboxylé et plus particulièrement consiste en un ou plusieurs copolymères choisis parmi les copolymères séquences, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire moyenne en poids du copolymère de styrène et de diène conjugué, et notamment celle des copolymères mentionnés ci-dessus, peut être comprise, par exemple, entre 10000 et 600000 daltons et se situe de préférence entre 30000 et 400000 daltons. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment.

La quantité du ou des polymères additionnels et notamment la quantité de l'élastomère ou des élastomères réticulables au soufre dans la composante bitume/polymère peut être comprise entre 0,3 % et 20 % et de préférence entre 0,5 % et 10 % du poids du bitume de ladite composante.

La composante bitume/polymère, qui renferme un élastomère réticulable au soufre en plus du polymère oléfinique fonctionnalisé par des groupements époxy ou COOH peut être avantageusement soumise à une réticulation sous l'action d'un agent de couplage donneur de soufre pour former une composante bitume/polymère réticulée, qui constitue la composante bitume/polymère soumise au traitement par l'adjuvant acide.

L'agent de couplage donneur de soufre, que l'on utilise dans la préparation de la composante bitume/polymère réticulée, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0 % à 100 % d'un composante CA consistant en un ou plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale

$$R_8-(S)_m-(R_9-(S)_m)_w-R_{10}$$

dans laquelle $R_8$ et $R_{10}$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, $R_9$ est un radical hydrocarboné divalent, saturé ou insaturé, en $C_1$ à $C_{20}$, les $-(S)_m-$ représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et w représente un nombre entier prenant les valeurs de zéro à 10. Des polysulfures préférés répondent à la formule $R_{11}-(S)_p-R_{11}$, dans laquelle $R_{11}$ désigne un radical alkyle en $C_6$ à $C_{16}$, par exemple hexyle, octyle, dodécyle, tertiododécyle, hexadécyle, nonyle, décyle, et - $(S)_p$- représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule

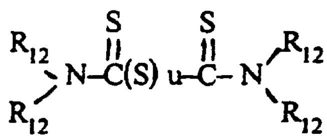

dans laquelle les $R_{12}$, identiques ou différents, représentent chacun un radical hydrocarboné en $C_1$ à $C_{12}$ et de préférence en $C_1$ à $C_8$, notamment radical alkyle, cycloalkyle ou aryle, ou bien deux radicaux $R_{12}$ fixés à un même atome d'azote sont reliés entre eux pour former un radical divalent hydrocarboné en $C_2$ à $C_8$ et u est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'- disulfure de caprolactame.

Les accélérateurs de vulcanisation non donneurs de soufre utilisables pour former la composante CC des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule

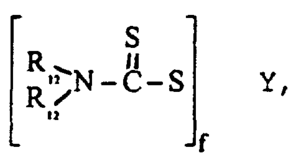

dans laquelle les $R_{12}$, identiques ou différents, ont la signification donnée plus haut, Y représente un métal et f désigne la valence de Y, et les monosulfures de thiurame de formule

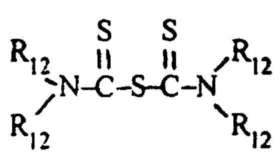

dans laquelle les $R_{12}$ ont la signification donnée plus haut.

Des exemples d'accélérateurs de vulcanisation du type des mercaptobenzothiazoles peuvent être tels que

mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates - de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1, 3 guanidine, diorthotolylguanidine et oxyde de zinc, ce dernier composé étant utilisé éventuellement en présence d'acide gras.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

L'agent de couplage est utilisé en quantité propre à fournir une quantité de soufre libre représentant 0,1 % à 20 % et de préférence 0,5 % à 10 % du poids d'élastomère réticulable au soufre dans la composante bitume/polymère que l'on soumet à la réticulation par l'agent de couplage.

La composante bitume/polymère, que l'on soumet à l'action de l'adjuvant acide, est préparée en mettant en contact le polymère oléfinique porteur de groupements fonctionnels époxy ou carboxy et, le cas échéant, le ou les polymères additionnels, par exemple élastomère réticulable au soufre, avec le bitume ou mélange de bitumes, dans des proportions choisies dans les intervalles définis précédemment, en opérant à des températures comprises entre 100°C et 230°C, plus particulièrement entre 120°C et 190°C, et sous agitation, pendant une durée d'au moins 10 minutes, généralement de l'ordre de quelques dizaines de minutes à quelques heures et par exemple de 10 minutes à 8 heures et plus particulièrement de 10 minutes à 5 heures pour former un produit de réaction constituant la composante bitume/polymère. Lorsqu'un polymère additionnel, par exemple un élastomère réticulable au soufre, est utilisé en plus du polymère oléfinique fonctionnalisé par des groupements époxy ou COOH, ledit polymère additionnel peut être mis en contact avec le bitume ou mélange de bitumes avant ou après le polymère oléfinique fonctionnalisé ou même en même temps que ce dernier.

Lorsque l'on désire produire une composante bitume/polymère réticulée, on forme tout d'abord, en opérant comme indiqué ci-dessus, une composante bitume/polymère non réticulée consistant en un bitume ou mélange de bitumes renfermant au moins un polymère oléfinique porteur de groupements fonctionnels époxy ou COOH et au moins un élastomère réticulable au soufre, par exemple un copolymère séquence de styrène et d'un diène conjugué, puis à ladite composante bitume/polymère non réticulée on incorpore l'agent de couplage donneur de soufre, en quantité appropriée choisie dans les intervalles définis plus haut pour ladite quantité, et l'on maintient le tout sous agitation à des températures comprises entre 100°C et 230°C, plus particulièrement entre 120°C et 190°C, et identiques ou non aux températures de préparation de la composante bitume/polymère non réticulée, pendant une durée d'au moins 10 minutes et généralement allant de 10 minutes à 5 heures, plus particulièrement de 30 minutes à 3 heures, pour former une masse de réaction constituant la composante bitume/polymère réticulée au soufre.

Le traitement de la composante bitume/polymère, non réticulée ou réticulée, par l'adjuvant acide est réalisé en incorporant ledit adjuvant acide, en quantité appropriée choisie dans les intervalles définis précédemment pour ladite quantité, à ladite composante bitume/polymère maintenue à des températures comprises entre 100°C et 230°C, plus particulièrement entre 120°C et 190°C, et sous agitation, puis en maintenant le tout aux températures comprises entre 100°C et 230°C, plus particulièrement entre 120°C et 190°C, et sous agitation pendant une durée d'au moins 10 minutes et notamment de 10 minutes à 5 heures, plus particulièrement de 30 minutes à 4 heures, pour produire la composition bitume/polymère à très faible susceptibilité thermique.

Au cours de sa constitution, la composante bitume/polymère du type non réticulé ou du type réticulé au soufre, que l'on soumet ensuite à l'action de l'adjuvant acide, peut être encore additionnée de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67,

compris entre 100°C et 600°C et situé plus spécialement entre 150°C et 900°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu réactionnel que l'on forme à partir du bitume, de l'élastomère réticulable au soufre et de l'agent de couplage donneur de soufre, à un moment quelconque de la constitution dudit milieu réactionnel, la quantité d'agent fluxant étant choisie, dans les intervalles définis plus haut, pour être compatible avec l'usage final désiré sur le chantier.

Le milieu réactionnel à base de bitume ou mélange de bitumes, de polymère oléfinique porteur de groupements fonctionnels époxy ou COOH et, lorsqu'ils sont utilisés, de polymère additionnel comme par exemple élastomère réticulable au soufre et agent de couplage donneur de soufre, qui donne naissance à la composante bitume/polymère non réticulée ou réticulée que l'on traite ensuite par l'adjuvant acide, peut encore renfermer un ou plusieurs additifs susceptibles de réagir avec les groupements époxy ou COOH du polymère oléfinique fonctionnalisé. Ces additifs réactifs peuvent être en particulier des amines, notamment polyamines, primaires ou secondaires, des alcools, notamment polyols, des acides, notamment polyacides, ou encore des sels métalliques.

Des additifs réactifs du type amine sont, par exemple, des diamines aromatiques telles que diamino-1, 4 benzène, diamino-2, 4 toluène, diaminonaphtalène, bis(amino-4 phényl) sulfone, bis (amino-4 phényl) éther, bis (amino-4 phényl) méthane, des diamines aliphatiques ou cycloaliphatiques telles que celles de formule $H_2N - R_{13} -NH_2$ où $R_{13}$ désigne un radical alkylène en $C_2$ à $C_{12}$ ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en $C_{12}$ à $C_{18}$ relié à l'atome d'azote d'un groupement amine.

Des additifs réactifs du type alcool sont, en particulier, des polyols tels que diols ou triols et notamment des diols de formule $HO - R_{14} - OH$, où $R_{14}$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule

$$HO - [C_q H_{2q} O]_r H$$

où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octane diol, polybutadiène polyhydroxylé.

Des additifs réactifs du type acide sont, en particulier, des polyacides de formule $HOOC - R_{14} -COOH$, où $R_{14}$ a la signification donnée plus haut. Des exemples de tels polyacides sont tels que acide phtalique, acide téréphtalique, acide malonique, acide succinique, acide adipique, acide glutarique, polybutadiène polycarboxylé.

Des additifs réactifs du type sel métallique sont, en particulier, des composés tels que hydroxydes, oxydes, alcoolates, carboxylates comme formiates et acétates, méthoxydes, éthoxydes, nitrites, carbonates et bicarbonates de métaux des groupes I, II, III et VIII du Tableau Périodique des Eléments, notamment Na, K, Li, Mg, Ca, Cd, Zn, Ba, Al, Fe.

La quantité de l'additif réactif ou des additifs réactifs, que l'on incorpore au milieu réactionnel donnant naissance aux composantes bitume/polymère, peut aller de 0,01 % à 10 % et plus particulièrement de 0,05 % à 5 % du poids de bitume présent dans ledit milieu réactionnel.

Outre les additifs réactifs et l'agent de fluxage, on peut encore incorporer au milieu réactionnel générant les composantes bitume/polymère, à un moment quelconque de la constitution dudit milieu réactionnel, des additifs conventionnellement utilisés dans les compositions bitume/polymère tels que des promoteurs d'adhésion de la composition bitume/polymère aux surfaces minérales ou encore des charges comme le talc, le noir de carbone, les pneus usagés réduits en poudrette.

Dans une forme de mise en oeuvre de la préparation de la composante bitume/polymère utilisant une huile hydrocarbonée telle que définie plus haut, à titre d'agent fluxant, le polymère oléfinique porteur de groupements fonctionnels époxy ou COOH et, s'ils sont présents, le polymère additionnel et l'agent de couplage donneur de soufre sont incorporés au bitume ou mélange de bitumes sous la forme d'une solution mère de ces produits dans l'huile hydrocarbonée constituant l'agent fluxant.

La solution mère est préparée par mise en contact des ingrédients la composant, à savoir huile hydrocarbonée

servant de solvant, polymère oléfinique à groupements époxy ou COOH et, si présents, polymère additionnel tel qu'élastomère réticulable au soufre et agent de couplage donneur de soufre, sous agitation, à des températures comprises entre 10°C et 170°C et plus particulièrement entre 40°C et 120°C, pendant une durée suffisante, par exemple comprise entre 10 minutes et 2 heures, pour obtenir une dissolution complète des ingrédients polymériques et de l'agent de couplage dans l'huile hydrocarbonée.

Les concentrations respectives du polymère oléfinique à groupements époxy ou COOH, du polymère additionnel et de l'agent de couplage dans la solution mère peuvent varier assez largement en fonction, notamment, de la nature de l'huile hydrocarbonée utilisée pour dissoudre lesdits ingrédients polymères et l'agent de couplage. Ainsi, les quantités respectives de polymère oléfinique fonctionalisé, de polymère additionnel et d'agent de couplage peuvent représenter avantageusement 1 % à 20 %, 5 % à 30 % et 0,005 % à 6 % du poids de l'huile hydrocarbonée.

Pour préparer les composantes bitume/polymère en faisant appel à la technique de la solution mère, on mélange la solution mère renfermant le polymère oléfinique fonctionnalisé et, si utilisés, le polymère additionnel et l'agent de couplage donneur de soufre, avec le bitume ou mélange de bitumes en opérant à des températures comprises entre 100°C et 230°C, plus particulièrement entre 120°C et 190°C, et sous agitation, ceci étant réalisé, par exemple, en incorporant la solution mère au bitume maintenu sous agitation aux températures entre 100°C et 230°C et plus particulièrement entre 120°C et 190°C, puis on maintient le mélange résultant sous agitation à des températures comprises entre 100°C et 230°C, plus particulièrement entre 120°C et 190°C, par exemple aux températures utilisées pour réaliser le mélange de la solution mère avec le bitume, pendant une durée au moins égale à 10 minutes, et généralement allant de 10 minutes à 2 heures, pour former un produit de réaction constituant la composante bitume/polymère.

La quantité de solution mère mélangée au bitume ou mélange de bitumes est choisie pour fournir les quantités désirées, par rapport au bitume, de polymère oléfinique à groupements époxy ou COOH, de polymère additionnel et d'agent de couplage donneur de soufre, lesdites quantités étant dans les fourchettes définies précédemment.

Les compositions bitume/polymère à très faible susceptibilité thermique obtenues par le procédé selon l'invention peuvent être utilisées telles quelles ou bien diluées avec des proportions variables d'un bitume ou mélange de bitumes ou d'une composition ayant des caractéristiques différentes obtenue par le procédé selon l'invention pour constituer des liants bitume/polymère ayant une teneur choisie en élastomère réticulé, qui peut être soit égale (composition non diluée) ou bien inférieure (composition diluée) à la teneur en élastomère réticulé des compositions bitume/polymère initiales correspondantes. La dilution des compositions bitume/polymère obtenues par le procédé selon l'invention avec le bitume ou mélange de bitumes ou avec une composition de caractéristiques différentes obtenue par le procédé selon l'invention peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère obtenue par le procédé selon l'invention peut être choisi parmi les bitumes définis précédemment, comme convenant à la préparation des compositions bitume/polymère. Le cas échéant, le bitume ou mélange de bitumes utilisé pour la dilution peut avoir été lui-même préalablement traité par un adjuvant acide selon l'invention.

La dilution d'une composition bitume/polymère par un bitume ou mélange de bitumes ou par une seconde composition à teneur plus faible en polymère (polymère oléfinique fonctionnalisé et, si présent, polymère additionnel) obtenue par le procédé selon l'invention, pour former un liant bitume/polymère à teneur choisie en polymère inférieure à celle de la composition bitume/polymère à diluer, est généralement réalisée en mettant en contact, sous agitation et à des températures comprises entre 100°C et 230°C et plus particulièrement entre 120°C et 190°C, des proportions convenables de la composition bitume/polymère à diluer et de bitume ou mélange de bitumes ou de seconde composition bitume/polymère selon l'invention.

Les liants bitume/polymère consistant en les compositions bitume/polymère selon l'invention ou résultant de la dilution desdites compositions par un bitume ou mélange de bitumes ou par une autre composition bitume/polymère selon l'invention, jusqu'à la teneur désirée en polymère(s) dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans ledits exemples, à savoir pénétrabilité, point de ramollissement Bille et Anneau et indice de PFEIFFER (IP), sont celles définies précédemment.

EXEMPLES 1 A 9 :

On préparait des compositions témoins bitumineuse (exemple 1) ou bitume/polymère (exemples 2, 4, 6 et

8), ainsi que des compositions bitume/polymère selon l'invention (exemples 3, 5, 7 et 9), pour en évaluer et comparer les caractéristiques physicomécaniques.

On opérait dans les conditions suivantes :

Exemple 1 (témoin) :

Préparation d'une composition bitumineuse consistant en un bitume modifié par un adjuvant acide.

Dans un réacteur maintenu à 175°C et sous agitation, on introduisait 1000 parties d'un bitume ayant une pénétrabilité, déterminée selon les modalités de la norme NF T 66004, dans l'intervalle 70/100 et 5 parties d'acide phosphorique à 75 %. Le contenu du réacteur était ensuite maintenu à 175°C sous agitation pendant une durée égale à 3 heures pour produire la composition bitumineuse.

Exemple 2 (témoin) :

Préparation d'une composition bitume/polymère non traitée par un adjuvant acide.

Dans un réacteur maintenu à 175°C et sous agitation, on introduisait 980 parties d'un bitume identique à celui utilisé dans l'exemple 1 ainsi que 20 parties d'un terpolymère éthylène/acrylate de méthyle/méthacrylate de glycidyle renfermant 24 % d'acrylate de méthyle et 8 % de méthacrylate de glycidyle et possédant un indice de fluidité, déterminé selon la norme ASTM D 1238, ayant une valeur égale à 6 g par 10 minutes. Après 2,5 heures de mélange sous agitation à 175°C, on obtenait une masse homogène constituant la composition bitume/polymère.

Exemple 3 (selon l'invention) :

Préparation d'une composition bitume/polymère en traitant une composante bitume/polymère non réticulée par un adjuvant acide.

Dans un réacteur maintenu à 175°C et sous agitation, on introduisait 980 parties d'un bitume identique à celui utilisé dans l'exemple 1, ainsi que 20 parties du terpolymère utilisé dans l'exemple 2 et l'on maintenait le tout sous agitation à 175°C pendant 2,5 heures.

Au contenu du réacteur, on ajoutait alors 5 parties d'acide phosphorique à 75 % et l'on maintenait ensuite l'ensemble à 175°C sous agitation pendant 3 heures, pour former la composition bitume/polymère.

Exemple 4 (témoin) :

Préparation d'une composition non réticulée bitume/polymère incluant un élastomère et non traitée par un adjuvant acide.

Dans un réacteur maintenu à 175°C et sous agitation, on introduisait 955 parties d'un bitume identique à celui utilisé dans l'exemple 1, puis 30 parties d'un élastomère consistant en un copolymère triséquencé styrène/butadiène/styrène, ayant une masse moléculaire moyenne de 150000 daltons et renfermant 30 % de styrène, et 15 parties du terpolymère utilisé dans l'exemple 2. Le contenu du réacteur était ensuite maintenu sous agitation à 175°C, pendant 2,5 heures, pour former la composition bitume/polymère non réticulée.

Exemple 5 (selon l'invention) :

Préparation d'une composition bitume/polymère non réticulée incluant un élastomère et traitée par un adjuvant acide.

En opérant comme décrit dans l'exemple 4, on préparait une composition bitume/polymère non réticulée incluant un élastomère, dite composante bitume/polymère. Au contenu du réacteur, on incorporait alors 4 parties d'un acide polyphosphorique, puis maintenait le milieu réactionnel ainsi formé, à 175°C et sous agitation pendant une durée égale à 2,5 heures pour produire la composition bitume/polymère selon l'invention. L'acide polyphosphorique utilisé répondait à la formule $P_nH_{n+2}O_{3n+1}$, n étant un nombre égal à environ 3.

Exemple 6 (témoin) :

Préparation d'une composition bitume/polymère non réticulée et non traitée par un adjuvant acide.

On préparait une composition bitume/polymère en opérant comme décrit dans l'exemple 2, avec toutefois utilisation d'un bitume ayant une pénétrabilité comprise dans l'intervalle 180/220.

Exemple 7 (selon l'invention) :

Préparation d'une composition bitume/polymère en traitant une composante bitume/polymère par un adjuvant acide.

En opérant comme décrit dans l'exemple 6, on préparait une composition bitume/polymère non réticulée dite composante bitume/polymère. Au contenu du réacteur, on incorporait alors 3 parties d'acide méthane sulfonique, puis maintenait le tout à 175°C, sous agitation, pendant une durée de 3 heures pour produire la composition bitume/polymère selon l'invention.

Exemple 8 (témoin) :

Préparation d'une composition bitume/polymère réticulée non traitée par un adjuvant acide.

Dans un réacteur maintenu à 175°C et sous agitation, on introduisait 960 parties d'un bitume identique à celui utilisé dans l'exemple 6, puis 30 parties d'un élastomère consistant en un copolymère diséquencé styrène/butadiène, ayant une masse moléculaire moyenne de 100000 daltons et une teneur en styrène de 25 %, et 10 parties du terpolymère utilisé dans l'exemple 2 et l'on maintenait le milieu réactionnel ainsi formé sous agitation, à 175°C, pendant 2,5 heures. Au contenu du réacteur, on ajoutait alors 0,8 partie de soufre et maintenait l'ensemble sous agitation, à 175°C, pendant 3 heures pour former une composition bitume/polymère réticulée.

Exemple 9 (selon l'invention) :

Préparation d'une composition bitume/polymère réticulée et traitée par un adjuvant acide.

En opérant comme décrit dans l'exemple 8, on préparait une composition bitume/polymère réticulée au soufre, dite composante bitume/polymère réticulée. Au contenu du réacteur, on incorporait alors 5 parties d'acide sulfurique à 98 %, puis maintenait le milieu réactionnel ainsi formé, à 175°C et sous agitation, pendant une durée de 2,5 heures pour produire la composition bitume/polymère réticulée traitée par un adjuvant acide selon l'invention.

Pour chacune des compositions obtenues comme indiqué dans les exemples 1 à 9, on a déterminé les caractéristiques suivantes :

- pénétrabilité à 25°C (Pen.),
- température de ramollissement bille et anneau (TBA),
- indice de PFEIFFER (IP).

Les résultats obtenus sont rassemblés dans le tableau ci-après.

Dans ce tableau, les sigles BT1, BT2, TPO, SBS et SB ont les significations suivantes :

- BT1 : bitume non modifié de pénétrabilité dans l'intervalle 70/100 ;
- BT2 : bitume non modifié de pénétrabilité dans l'intervalle 180/220 ;
- TPO : terpolymère éthylène/acrylate de méthyle/méthacrylate de glycidyle utilisé dans les exemples 2, 3, 4, 5, 6, 7, 8 et 9 ;
- SBS : copolymère triséquencé styrène/butadiène/styrène utilisé dans les exemples 4 et 5 ;
- SB : copolymère diséquencé styrène/butadiène utilisé dans les exemples 8 et 9.

Les teneurs des compositions en TPO, SBS et SB sont exprimées en pourcentages pondéraux des quantités globales de bitume et polymère(s).

La teneur en soufre est exprimée en % du poids du bitume.

Tableau

| Exemples | Nature de l'adjuvant acide | TPO (%) | SBS (%) | SB (%) | Soufre (%) | Pen (1/10 mm) | TBA (°C) | IP |
|---|---|---|---|---|---|---|---|---|
| BT1 | | | | | | 90 | 46 | -0,8 |
| 1 | Acide phosphorique | | | | | 75 | 53 | 0,6 |
| 2 | Pas d'adjuvant acide | 2 | | | | 85 | 55 | 1,4 |
| 3 | Acide phosphorique | 2 | | | | 60 | 69,4 | 3,2 |
| 4 | Pas d'adjuvant acide | 1,5 | 3 | | | 55 | 65 | 2,2 |
| 5 | Acide polyphosphorique | 1,5 | 3 | | | 45 | 76 | 3,5 |
| BT2 | | | | | | 190 | 40,9 | 0,12 |
| 6 | Pas d'adjuvant acide | 2 | | | | 139 | 50 | 1,9 |
| 7 | Acide méthane sulfonique | 2 | | | | 93 | 58,9 | 2,6 |
| 8 | Pas d'adjuvant acide | 1 | | 3 | 0,1 | 118 | 60 | 3,7 |
| 9 | $H_2SO_4$ | 1 | | 3 | 0,1 | 75 | 72 | 4,3 |

Au vu des caractéristiques rassemblées dans le tableau, il apparaît que :

- l'incorporation d'un polymère oléfinique fonctionnalisé selon l'invention, par exemple polymère oléfinique porteur de groupements époxy, à un bitume améliore les propriétés physiques dudit bitume (augmentation de la valeur TBA et de l'incide de PFEIFFER) comme il ressort de la comparaison de l'exemple 2 avec BT1 ou de l'exemple 6 avec BT2 ;
- l'addition d'un adjuvant acide selon l'invention à un bitume renforce aussi la consistance du bitume (augmentation de la valeur TBA et de l'indice de PFEIFFER) comme il ressort de la comparaison de l'exemple 1 avec BT1.
- l'ajout d'un adjuvant acide selon l'invention à un bitume modifié par un polymère oléfinique fonctionnalisé selon l'invention, par exemple polymère oléfinique porteur de groupements époxy, conduit à un renforcement accru des propriétés physiques de la composition (augmentation plus importante de la valeur de TBA et de l'indice de PFEIFFER que dans le cas précédent) par un phénomène de synergie entre les deux agents de modification, à savoir polymère oléfinique fonctionnalisé et adjuvant acide, comme il ressort de la comparaison des résultats de l'exemple 3 avec les résultats des exemples témoins 1 et 2 ;
- l'effet de synergie précité est magnifié lorsque la composante bitume/polymère traitée par l'adjuvant acide renferme un élastomère en plus du polymère oléfinique fonctionnalisé, comme on peut le voir à la comparaison des résultats de l'exemple 5 selon l'invention avec les résultats de l'exemple 4 témoin ;
- l'effet de synergie magnifié est encore plus marqué si la composition bitume/polymère renfermant un élastomère, que l'on soumet au traitement par l'adjuvant acide, a été soumise à une réticulation au soufre préalablement audit traitement, comme il ressort de la comparaison des résultats de l'exemple 9 selon l'invention avec les résultats de l'exemple 8 témoin.

**Revendications**

**1.** Procédé de préparation de compositions bitume/polymère, présentant, entre autres, une très faible susceptibilité thermique, dans lequel on met en contact, en opérant à des températures comprises entre 100°C et 230°C et sous agitation pendant une durée d'au moins 10 minutes, un bitume ou mélange de bitumes avec, comptés en

poids du bitume ou mélange de bitumes, 0,01 % à 20 % d'au moins un polymère oléfinique porteur de groupements fonctionnels époxy ou COOH pour former un produit de réaction dit composante bitume/polymère, ledit procédé **se caractérisant en ce qu'**à la composante bitume/polymère, maintenue à des températures comprises entre 100°C et 230°C et sous agitation, on incorpore 0,005 % à 6 %, en poids du bitume ou mélange de bitumes, d'un adjuvant acide et l'on maintient le milieu réactionnel ainsi formé à des températures comprises entre 100°C et 230°C et sous agitation pendant une durée d'au moins 10 minutes pour produire la composition bitume/polymère, ledit adjuvant acide étant constitué d'un ou plusieurs composés choisis dans le groupe formé par les acides phosphoriques, les acides boriques, l'acide sulfurique, les anhydrides desdits acides, l'acide chlorosulfurique, les acides polyphosphoriques, les acides phosphoniques de formule

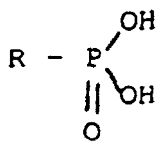

et les acides de formule $R\text{-}(COO)_t\text{-}SO_3H$ avec dans lesdites formules t prenant la valeur zéro ou un et R désignant un radical hydrocarboné monovalent choisi dans le groupe constitué des radicaux hydrocarbonés monovalents acycliques en $C_1$ à $C_6$ et des radicaux hydrocarbonés cycliques monovalents renfermant 4 à 12 atomes de carbone cycliques et éventuellement substitués par des radicaux hydrocarbonés monovalents acycliques en $C_1$ à $C_{16}$.

2. Procédé selon la revendication 1, **caractérisé en ce que** la quantité totale d'adjuvant acide, incorporée à la composante bitume/polymère, représente 0,01 % à 3 % en poids du bitume ou mélange de bitumes.

3. Procédé selon la revendication 1 ou 2, **caractérisé en ce que** l'adjuvant acide est choisi parmi $H_3PO_4$, $P_2O_5$, $H_3BO_3$, $B_2O_3$, $H_2SO_4$, $SO_3$, $HSO_3Cl$, les acides polyphosphoriques, les mélanges d'au moins un acide polyphosphorique et d'acide sulfurique, les mélanges d'au moins un acide polyphosphorique et d'au moins un acide $R\text{-}(COO)_t\text{-}SO_3H$, les mélanges d'acide sulfurique et d'au moins un acide $R\text{-}(COO)_t\text{-}SO_3H$ et les mélanges d'acide sulfurique avec au moins un acide polyphosphorique et au moins un acide $R\text{-}(COO)_t\text{-}SO_3H$.

4. Procédé selon la revendication 3, **caractérisé en ce que** l'adjuvant acide consiste en une association constituée, en poids, de 20 % à 95 % et plus particulièrement de 40 % à 90 % d'un ou plusieurs acides polyphosphoriques et de 80 % à 5 % et plus particulièrement de 60 % à 10 % d'acide sulfurique et/ou d'acide méthane sulfonique.

5. Procédé selon l'une des revendications 1 à 4, **caractérisé en ce que** les acides polyphosphoriques sont des composés de formule $P_qH_rO_s$ dans laquelle q, r et s sont des nombres positifs tels que $q \geq 2$ et notamment allant de 3 à 20 et que $5q+r-2s=0$, lesdits acides polyphosphoriques ayant en particulier la formule

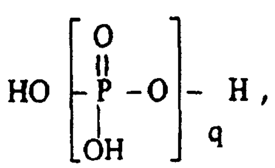

q ayant la signification ci-dessus.

6. Procédé selon l'une des revendications 1 à 3, **caractérisé en ce que** les acides $R\text{-}(COO)_t\text{-}SO_3H$ sont tels que R est un radical alkyle linéaire ou ramifié en $C_1$ à $C_{16}$, un radical cycloalkyle en $C_4$ à $C_{12}$ et plus particulièrement en $C_5$ à $C_8$ ou encore un radical monovalent aromatique ayant 6 atomes cycliques et qui peut être éventuellement substitué par un radical alkyle linéaire ou ramifié en $C_1$ à $C_{16}$.

7. Procédé selon l'une des revendications 1 à 6, **caractérisé en ce que** la quantité de polymère oléfinique porteur de groupements fonctionnels époxy ou COOH mis en contact avec le bitume ou mélange de bitumes, pour former la composante bitume/polymère, représente 0,05 % à 10 % et plus spécialement 0,1 % à 6 % du poids de bitume ou mélange de bitume.

**8.** Procédé selon l'une des revendications 1 à 7, **caractérisé en ce que** le polymère oléfinique porteur de groupements époxy ou COOH est choisi parmi les copolymères renfermant, en poids, x % de motifs issus de l'éthylène ou du propylène, y % de motifs issus d'un ou plusieurs monomères A de formule

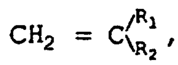

z % de motifs issus d'au moins un monomère B de formule

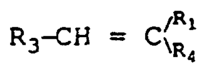

et v % de motifs issus d'un ou plusieurs monomères C différents des monomères A et B, avec, dans ces formules, $R_1$ désignant H, $CH_3$ ou $C_2H_5$, $R_2$ représentant un radical $-COOR_5$, $-OR_5$ ou $-OOCR_6$ avec $R_5$ désignant un radical alkyle en $C_1$ à $C_{10}$ et de préférence en $C_1$ à $C_6$ et $R_6$ représentant H ou un radical alkyle en $C_1$ à $C_3$, $R_3$ désignant H, COOH ou $COOR_5$, $R_5$ ayant la définition précitée, et $R_4$ désignant un radical -COOH,

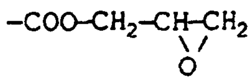 ou 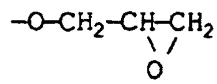

et x, y, z et v étant des nombres tels que $40 \leq x \leq 99{,}9$, $0 \leq y \leq 50$, $0{,}1 \leq z \leq 20$ et $0 \leq v \leq 15$ avec $x+y+z+v = 100$.

**9.** Procédé selon la revendication 8, **caractérisé en ce que**, dans le polymère oléfinique à groupements époxy ou COOH, x, y, z et v sont tels que $50 \leq x \leq 99{,}5$, $0 \leq y \leq 40$, $0{,}5 \leq z \leq 15$ et $0 \leq v \leq 10$ avec $x+y+z+v = 100$.

**10.** Procédé selon la revendication 8 ou 9, **caractérisé en ce que** les monomères A sont choisis parmi le formiate de vinyle, l'acétate de vinyle, le propionate de vinyle, le butyrate de vinyle, les éthers de vinyle $CH_2 = CH\text{-}O\text{-}R_5$, les acrylates d'alkyle de formule $CH_2 = CH\text{-}COOR_5$ et les méthacrylates d'alkyle de formule

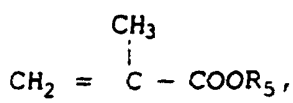

$R_5$ étant un radical alkyle en $C_1$ à $C_{10}$ et de préférence en $C_1$ à $C_6$, notamment méthyle, éthyle, propyle, butyle.

**11.** Procédé selon l'une des revendications 8 à 10, **caractérisé en ce que** les monomères B sont choisis parmi l'acide maléique et son anhydride, l'acide acrylique, l'acide méthacrylique, les maléates acides d'alkyle de formule $HOOC\text{-}CH = CH\text{-}COOR_7$ où $R_7$ est un radical alkyle en $C_1$ à $C_6$, l'acrylate de glycidyle, le méthacrylate de glycidyle et le vinyléther de glycidyle.

**12.** Procédé selon l'une des revendications 8 à 11, **caractérisé en ce que** les monomères C sont choisis parmi CO, $SO_2$ et acrylonitrile.

**13.** Procédé selon l'une des revendications 8 à 11, **caractérisé en ce que** les polymères oléfiniques à groupements époxy ou COOH sont choisis parmi :

(a) les copolymères statistiques d'éthylène et d'un monomère B choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(b) les terpolymères statistiques d'éthylène, d'un monomère A choisi parmi l'acétate de vinyle et les acrylates ou méthacrylates d'alkyle à reste alkyle en $C_1$ à $C_6$ tel que méthyle, éthyle, propyle, butyle, hexyle, et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et

(c) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques d'éthylène et d'acétate de vinyle ou d'éthylène et d'acrylate ou de méthacrylate d'alkyle à reste alkyle en $C_1$ à $C_6$ tel que méthyle, éthyle, propyle, butyle, hexyle, qui renferment, en poids, 40 % à 99,7 % et de préférence 50 % à 99 % d'éthylène, lesdits copolymères greffés renfermant, en poids 0,5 % à 15 % de motifs greffés issus du monomère B.

**14.** Procédé selon la revendication 13, **caractérisé en ce que** les polymères oléfiniques à groupements époxy ou COOH sont choisis parmi :

(i) les terpolymères statistiques d'éthylène, d'acrylate ou méthacrylate d'alkyle à reste alkyle en $C_1$ à $C_6$ tel que méthyle, éthyle, butyle, et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(ii) les terpolymères statistiques d'éthylène, d'acrylate ou méthacrylate d'alkyle à reste alkyle en $C_1$ à $C_6$ tel que méthyle, éthyle, butyle, et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ;
(iii) les polyéthylènes basse densité greffés anhydride maléique et les polypropylènes greffés anhydride maléique, qui renferment, en poids, 0,5 % à 15 % de motifs greffés issus de l'anhydride maléique ;
(iv) les polyéthylènes basse densité greffés acrylate ou méthacrylate de glycidyle et les polypropylènes greffés acrylate ou méthacrylate de glycidyle, qui renferment, en poids, 0,5 % à 15 % de motifs greffés issus du dérivé glycidyle.

**15.** Procédé selon l'une des revendications 8 à 14, **caractérisé en ce que** les polymères oléfiniques à groupements époxy ou COOH possèdent un indice de fluidité, déterminé selon la norme ASTM D 1238 ayant une valeur, exprimée en grammes par 10 minutes, comprise entre 0,3 et 3000 et de préférence entre 0,5 et 900.

**16.** Procédé selon l'une des revendications 1 à 15, **caractérisé en ce que** le bitume ou mélange de bitumes est choisi parmi les bitumes ayant une viscosité cinématique à 100°C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$.

**17.** Procédé selon la revendication 16, **caractérisé en ce que** le bitume ou mélange de bitumes présente une pénétrabilité à 25°C, définie selon la norme NF T 66004, comprise entre 5 et 800 et de préférence entre 10 et 400.

**18.** Procédé selon l'une des revendications 1 à 17, **caractérisé en ce que** l'on incorpore à la composante bitume/polymère, au cours de sa préparation, un ou plusieurs polymères additionnels différents des polymères oléfiniques à groupements époxy ou COOH, le ou lesdits polymères additionnels étant en particulier des élastomères.

**19.** Procédé selon la revendication 18, **caractérisé en ce que** le ou lesdits élastomères sont des élastomères réticulables au soufre.

**20.** Procédé selon la revendication 19, **caractérisé en ce que** la quantité d'élastomère réticulable au soufre représente entre 0,3 % et 20 % et de préférence entre 0,5 % et 10 % du poids du bitume ou mélange de bitumes.

**21.** Procédé selon la revendication 19 ou 20, **caractérisé en ce que** les élastomères réticulables au soufre sont des copolymères statistiques ou séquences de styrène et d'un diène conjugué, ledit diène étant en particulier tel que butadiène, isoprène, chloroprène, butadiène carboxylé et isoprène carboxylé.

**22.** Procédé selon la revendication 21, **caractérisé en ce que** les copolymères de styrène et de diène conjugué renferment, en poids, 5 % à 50 % de styrène.

**23.** Procédé selon la revendication 21 ou 22, **caractérisé en ce que** la masse moléculaire moyenne en poids du copolymère de styrène et de diène conjugué est comprise entre 10000 et 600000 daltons et de préférence entre 30000 et 400000 daltons.

**24.** Procédé selon l'une des revendications 19 à 23, **caractérisé en ce que** la composante bitume/polymère, à base

de bitume ou mélange de bitumes, de polymère oléfinique à groupements époxy ou COOH et d'élastomère réticulable au soufre, est soumise à une réticulation sous l'action d'un agent de couplage donneur de soufre pour produire une composante bitume/polymère réticulée.

**25.** Procédé selon la revendication 24, **caractérisé en ce que** l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

**26.** Procédé selon la revendication 25, **caractérisé en ce que** l'agent de couplage donneur de soufre est choisi parmi les produits M, qui renferment, en poids, de 0 % à 100 % d'une composante CA consistant en un ou plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

**27.** Procédé selon l'une des revendications 24 à 26, **caractérisé en ce que** l'agent de couplage est utilisé en quantité propre à fournir une quantité de soufre libre représentant 0,1 % à 20 % du poids d'élastomère réticulable au soufre dans la composante bitume/polymère soumise à la réticulation.

**28.** Procédé selon l'une des revendications 1 à 23, **caractérisé en ce que** la composante bitume/polymère est préparée en mettant en contact le ou les polymères oléfiniques porteurs de groupements époxy ou COOH et, en cas d'utilisation, le ou les polymères additionnels, par exemple élastomère réticulable au soufre, avec le bitume ou mélange de bitumes, dans les proportions désirées, en opérant à des températures comprises entre 100°C et 230°C, plus particulièrement entre 120°C et 190°C, et sous agitation, pendant une durée d'au moins 10 minutes et plus particulièrement de 10 minutes à 5 heures.

**29.** Procédé selon l'une des revendications 24 à 27, **caractérisé en ce que** la composante bitume/polymère réticulée est préparée en mettant en contact le ou les polymères oléfiniques porteurs de groupements époxy ou COOH et le ou les élastomères réticulables au soufre avec le bitume ou mélange de bitumes, dans les proportions désirées, en opérant à des températures comprises entre 100°C et 230°C, plus particulièrement entre 120°C et 190°C, et sous agitation, pendant une durée d'au moins 10 minutes et plus particulièrement de 10 minutes à 5 heures, puis au produit obtenu, constituant la composante bitume/polymère non réticulée, on incorpore l'agent de couplage donneur de soufre, en quantité désirée, et l'on maintient le tout sous agitation à des températures comprises entre 100°C et 230°C, plus particulièrement entre 120°C et 190°C, pendant une durée d'au moins 10 minutes et, notamment, allant de 10 minutes à 5 heures et plus particulièrement de 10 minutes à 3 heures pour former une masse de réaction constituant la composante bitume/polymère réticulée.

**30.** Procédé selon la revendication 28 ou 29, **caractérisé en ce que** l'on incorpore l'adjuvant acide, en quantité désirée, à la composante bitume/polymère non réticulée ou réticulée en opérant à des températures comprises entre 100°C et 230°C, plus particulièrement entre 120°C et 190°C, et sous agitation, puis en maintenant le tout aux températures comprises entre 100°C et 230°C, plus particulièrement entre 120°C et 190°C, et sous agitation pendant une durée d'au moins 10 minutes, et, notamment de 10 minutes à 5 heures et plus particulièrement de 30 minutes à 4 heures pour produire la composition bitume/polymère à très faible susceptibilité thermique.

**31.** Procédé selon l'une des revendications 28 à 30, **caractérisé en ce que**, au cours de sa constitution, la composante bitume/polymère réticulée ou la composante bitume/polymère non réticulée, que l'on soumet ensuite à l'action de l'adjuvant acide, est additionnée de 1 % à 40 % et plus particulièrement de 2 % à 30 %, en poids du bitume, d'un agent fluxant.

**32.** Procédé selon la revendication 31, **caractérisé en ce que** l'agent fluxant consiste en une huile hydrocarbonée présentant un intervalle de distillation à pression atmosphérique, déterminé selon la norme ASTM D 86-67, compris entre 100°C et 600°C et situé plus spécialement entre 150°C et 400°C, ladite huile hydrocarbonée étant, en particulier, une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale.

**33.** Procédé selon la revendication 32, **caractérisé en ce que** le ou les polymères oléfiniques porteurs de groupements époxy ou COOH et, s'ils sont présents, le ou les polymères additionnels et l'agent de couplage sont incorporés au bitume ou mélange de bitumes sous la forme d'une solution mère de ces produits dans l'huile hydrocarbonée constituant l'agent fluxant.

**34.** Procédé selon la revendication 33, **caractérisé en ce que** la solution mère renferme, en poids de l'huile hydrocarbonée, 1 % à 20 % du ou des polymères oléfiniques à groupements époxy ou COOH, et, en cas d'utilisation, 5 % à 30 % du ou des polymères additionnels et 0,005 % à 6 % d'agent de couplage.

**35.** Procédé selon la revendication 33 ou 34, **caractérisé en ce que** l'on mélange la solution mère avec le bitume ou mélange de bitumes en opérant à des températures comprises entre 100°C et 230°C, plus particulièrement entre 120°C et 190°C, et sous agitation, puis on maintient le mélange résultant sous agitation à dès températures comprises entre 100°C et 230°C, plus particulièrement entre 120°C et 190°C, pendant une durée d'au moins 10 minutes et, notamment, allant de 10 minutes à 2 heures, pour produire la composante bitume/polymère.

**36.** Procédé selon l'une des revendications 1 à 35, **caractérisé en ce que**, au cours de sa préparation, la composante bitume/polymère du type non réticulé ou du type réticulé, que l'on soumet au traitement par l'adjuvant acide, est additionnée d'un ou plusieurs additifs susceptibles de réagir avec les groupements fonctionnels du ou des polymères oléfiniques à groupements époxy ou COOH qu'elle renferme, lesdits additifs réactifs étant en particulier des amines, notamment polyamines, primaires ou secondaires, des alcools et notamment des polyols, des acides et notamment des polyacides, ou encore des sels métalliques, notamment composés de métaux des groupes I, II, III et VIII du Tableau Périodique des Eléments.

**37.** Procédé selon la revendication 36, **caractérisé en ce que** la quantité d'additif réactif ou d'additifs réactifs incorporée au milieu réactionnel, donnant naissance à la composante bitume/polymère, représente 0,01 % à 10 % et de préférence 0,05 % à 5 % du poids du bitume ou mélange de bitumes.

**38.** Application des compositions bitume/polymère obtenues par le procédé selon l'une des revendications 1 à 37, à la production de liants bitume/polymère, lesdits liants consistant en lesdites compositions utilisées telles quelles ou bien étant formés par dilution desdites compositions bitume/polymère par un bitume ou mélange de bitumes ou par une composition bitume/polymère obtenue par le procédé selon l'une des revendications 1 à 37 à teneur globale plus faible en polymère, lesquels liants bitume/polymère sont notamment utilisables, directement ou après mise en émulsion aqueuse, à la réalisation de revêtements, notamment revêtements routiers du type enduit superficiel, à la production d'enrobés mis en place à chaud ou à froid, ou encore à la réalisation de revêtements d'étanchéité.

**Patentansprüche**

**1.** Verfahren zur Herstellung von Bitumen/Polymer-Zusammensetzungen, welche u.a. eine sehr geringe thermische Empfindlichkeit haben, wobei man bei Temperaturen zwischen 100°C und 230°C und unter Rühren über einen Zeitraum von mindestens 10 min. ein Bitumen oder ein Bitumengemisch mit, bezogen auf das Gewicht des Bitumens oder Bitumengemisches 0,01% bis 20% mindestens eines Olefin-Polymers, welches funktionelle Epoxy- oder COOH-Gruppen trägt, miteinander in Kontakt bringt, um eine Bitumen/Polymer-Zusammensetzung als Reaktionsprodukt zu bilden, wobei das Verfahren **dadurch gekennzeichnet ist, dass** man der bei Temperaturen zwischen 100°C und 230°C unter Rühren gehaltenen Bitumen/Polymer-Zusammensetzung 0,005% bis 6%, bezogen auf das Bitumen oder Bitumengemisch, eines sauren Hilfsmittels zusetzt und das so gebildete Reaktionsmedium bei Temperaturen zwischen 100°C und 230°C unter Rühren über einen Zeitraum von mindestens 10 min. hält, um die Bitumen/Polymer-Zusammensetzung zu erzeugen, wobei das saure Hilfsmittel zusammengesetzt ist aus einer oder mehreren Verbindungen, die ausgewählt sind aus der Gruppe der Phosphorsäuren, der Borsäuren, der Schwefelsäure, der Anhydride dieser Säuren, der Chlorschwefelsäure, der Polyphosphorsäuren, der Phosphonsäuren der Formel

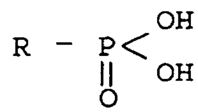

und der Säuren der Formel R-$(COOH)_t$-$SO_3H$, worin t den Wert 0 oder 1 und R einen einwertigen Kohlenwasserstoffrest, ausgewählt aus der Gruppe der einwertigen, acyclischen $C_1$bis $C_6$-Kohlenwasserstoffreste und der einwertigen cyclischen Kohlenwasserstoffreste mit 4 bis 12 cyclischen Kohlenstoffatomen, die gegebenenfalls durch einwertige acyclische $C_1$- bis $C_{16}$-Kohlenstoffreste substituiert sind, bedeuten.

2. Verfahren nach Anspruch 1, **dadurch gekennzeichnet, dass** die in der Bitumen/Polymerzusammensetzung enthaltene Gesamtmenge an saurem Hilfsmittel 0,01% bis 3%, bezogen auf das Gewicht des Bitumen oder des Bitumengemisches, beträgt.

3. Verfahren nach Anspruch 1 oder 2, **dadurch gekennzeichnet, dass** das saure Hilfsmittel ausgewählt ist aus $H_3PO_4$, $P_2O_5$, $H_3BO_3$, $B_2O_3$, $H_2SO_4$, $SO_3$, $HSO_3Cl$, den Polyphosphorsäuren, den Gemischen aus mindestens einer Polyphosphorsäure und Schwefelsäure, den Gemischen aus mindestens einer Polyphosphorsäure und mindestens einer Säure R-$(COO)_t$-$SO_3$, den Gemischen aus Schwefelsäure und mindestens einer Säure R-$(COO)_t$-$SO_3H$ und den Gemischen der Schwefelsäure mit mindestens einer Polyphosphorsäure und mindestens einer Säure R-$(COO)_t$-$SO_3$ ausgewählt sind.

4. Verfahren nach Anspruch 3, **dadurch gekennzeichnet, dass** das saure Hilfsmittel eine Mischung darstellt, das, bezogen auf das Gewicht, aus 20% bis 95%, insbesondere aus 40% bis 90%, einer oder mehrerer Polyphosphorsäuren und aus 80% bis 5%, insbesondere aus 60% bis 10% Schwefelsäure und/oder Methansulfonsäure besteht.

5. Verfahren nach einem der Ansprüchen 1 bis 4, **dadurch gekennzeichnet, dass** die Polyphosphorsäuren Verbindungen der Formel $P_qH_rO_s$ darstellen, worin q, r und s positive Zahlen wie $q \geq 2$, insbesondere 3 bis 20, und $5q + r - 2s = 0$ bedeuten, wobei diese Polyphosphorsäuren insbesondere die Formel

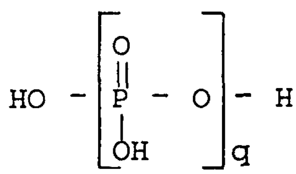

haben, worin q die vorstehend angegebene Bedeutung hat.

6. Verfahren nach einem der Ansprüche 1 bis 3, **dadurch gekennzeichnet, dass** in den Säuren R-$(COO)_t$-$SO_3H$ R einen linearen oder verzweigten $C_1$- bis $C_{16}$-Alkylrest, einen $C_4$ bis $C_{12}$-Cycloalkylrest, insbesondere mit $C_5$ bis $C_8$, oder einen einwertigen aromatischen Rest mit 6 cyclischen Atomen darstellt, der gegebenenfalls durch einen linearen oder verzweigten $C_1$- bis $C_{16}$-Alkylrest substituiert sein kann.

7. Verfahren nach einem der Ansprüche 1 bis 6, **dadurch gekennzeichnet, dass** die Menge des Olefinpolymers mit den funktionellen Epoxy- oder COOH-Gruppen, die mit dem Bitumen oder dem Bitumengemisch in Berührung gebracht wird, um die Bitumen/Polymer-Zusammensetzung zu bilden, 0,05% bis 10%, insbesondere 0,1% bis 6% des Gewichts des Bitumens oder des Bitumengemisches ausmacht.

8. Verfahren nach einem der Ansprüche 1 bis 7, **dadurch gekennzeichnet, dass** das Olefinpolymer mit den Epoxy- oder COOH-Gruppen, aus Copolymeren ausgewählt ist, die, bezogen auf das Gewicht, x % Bestandteile aus dem Ethylen oder dem Propylen, y % Bestandteile aus einem oder mehreren Monomeren A der Formel

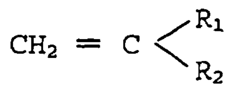

z % Bestandteile aus mindestens einem Monomer B der Formel

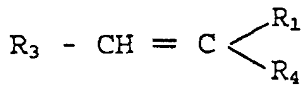

und v % Bestandteile aus einem oder mehreren Monomeren C, das (die) sich von den Monomeren A und B unterscheidet(en), enthalten, wobei in diesen Formeln $R_1$ H, $CH_3$ oder $C_2H_5$, $R_2$ einen Rest $-COOR_5$, $-OR_5$ oder $-OOR_6$ bedeuten, worin $R_5$ einen $C_1$- bis $C_{10}$-Alkylrest, vorzugsweise mit $C_1$ bis $C_6$, und $R_6$ H oder einen $C_1$- bis $C_3$-Alkylrest, $R_3$H, COOH oder $COOR_5$ bedeuten, wobei $R_5$ eine bestimmte Definition hat, und $R_4$ einen Rest -COOH,

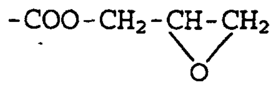

oder

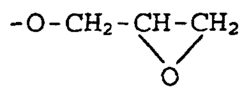

und x, y, z und v Zahlen wie $40 \leq x \leq 99{,}9$, $0 \leq y \leq 50$, $0{,}1 \leq z \leq 20{,}0 \leq v \leq 15$ bedeuten, wobei $x + y + z + v = 100$ bedeutet.

**9.** Verfahren nach Anspruch 8, **dadurch gekennzeichnet, dass** in dem Olefinpolymer mit Epoxy- oder COOH-Gruppen x, y, z und v $50 \geq x \geq 99{,}5$, $0 \geq y \geq 40$, $0{,}5 \geq z \geq 15$ und $0 \geq v \geq 10$ bedeuten, wobei $x + y + z + v = 100$ bedeutet.

**10.** Verfahren nach Anspruch 8 oder 9, **dadurch gekennzeichnet, dass** die Monomeren A aus Vinylformiat, Vinylacetat, Vinylproprionat, Vinylbutyrat, aus Vinylethern $CH_2 = CH\text{-}O\text{-}R_5$ aus Alkylacrylaten der Formel $CH_2$ $CH\text{-}COOR_5$ und aus Alkylmethacrylaten der Formel

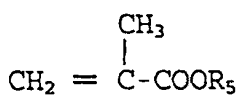

ausgewählt sind, wobei $R_5$ einen $C_1$ bis $C_{10}$-Alkylrest, vorzugsweise mit $C_1$ bis $C_6$, insbesondere Methyl, Ethyl, Propyl, Butyl bedeutet.

**11.** Verfahren nach einem der Ansprüche 8-10, **dadurch gekennzeichnet, dass** die Monomeren B aus Maleinsäure und seinem Anhydrid, aus Acrylsäure, Methacrylsäure, den sauren Alkylmaleaten der Formel $HOOC\text{-}CH = CH\text{-}COOR_7$, worin $R_7$ ein $C_1$ bis $C_6$ Akrylrest bedeutet, aus Glycidylacrylat, Glycidylmethacrylat und dem Glycidyl-Vinylether ausgewählt sind.

**12.** Verfahren nach einem der Ansprüche 8 bis 11, **dadurch gekennzeichnet, dass** die Monomere C aus CO, $SO_2$ und Acrylnitril ausgewählt sind.

**13.** Verfahren nach einem der Ansprüche 8 bis 11, **dadurch gekennzeichnet, dass** die Olefinpolymeren mit Epoxy- oder COOH-Gruppen ausgewählt sind aus

(a) den statistischen Copolymeren des Ethylens und eines Monomers B, ausgewählt aus Acrylsäure, Methacrylsäure, Maleinsäure oder seinem Anhydrid, Glycidylacrylat und Glycidylmethacrylat, die 80 bis 99,7 Gew.-%, vorzugsweise 85 bis 99,5 Gew.-% Ethylen enthalten;

(b) den statistischen Terpolymeren des Ethylens, eines Monomers A, ausgewählt aus Vinylacetat und den Alkylacrylaten oder -methacrylaten mit $C_1$ bis $C_6$-Alkylresten, wie Methyl, Ethyl, Propyl, Butyl, Hexyl, und eines Monomers B, ausgewählt aus Acrylsäure, Methacrylsäure, Meleinsäure und seinem Anhydrid, Glycidylacrylat und Glycidylmethacrylat, die 0,5 bis 40 Gew.-% Bestandteile aus dem Monomer A und 0,5 bis 15 Gew.-% Bestandteile aus dem Monomer B enthalten, wobei der Rest aus Bestandteilen aus dem Ethylen gebildet ist; und

(c) den Copolymeren, erhältlich durch Pfropfen eines Monomers B, ausgewählt aus Acrylsäure, Methacrylsäure, Maleinsäure und seinem Anhydrid, Glycidylacrylat und Glycidylmethacrylat, auf einem Substrat, bestehend aus einem Polymer, welches ausgewählt ist aus Polyethylenen, insbesondere Polyethylenen mit niedriger Dichte, Polypropylenen und den statistischen Copolymeren des Ethylens und des Vinylacetats, oder des Ethylens und des Alkylacrylats oder -methacrylats mit $C_1$ bis $C_6$-Alkylresten, wie Methyl, Ethyl, Propyl, Butyl, Hexyl, die 40 bis 99,7 Gew.-%, vorzugsweise 50 bis 99 Gew.-% Ethylen enthalten, wobei die gepfropften Copolymere 0,5 bis 15 Gew.-% aufgepfropfte Bestandteile aus dem Monomer B enthalten.

**14.** Verfahren nach Anspruch 13, **dadurch gekennzeichnet, dass** die Olefinpolymere mit Epoxy- oder COOH-Gruppen ausgewählt sind aus

(i) den statistischen Terpolymeren des Ethylens, des Alkylacrylats oder -methacrylats mit $C_1$ bis $C_6$-Alkylresten, wie Methyl, Ethyl, Propyl, Butyl, und des Maleinsäureanhydrids, welche 0,5 bis 40 Gew.-% der Bestandteile aus dem Alkylacrylat oder -methacrylat und 0,5 bis 15% der Bestandteile aus dem Maleinsäureanhydrid enthält, wobei der Rest durch die aus dem Ethylen stammenden Bestandteile gebildet wird;

(ii) den statistischen Terpolymeren des Ethylens, des Alkylacrylats oder -methacrylats mit $C_1$ bis $C_6$-Alkylresten, wie Methyl, Ethyl, Butyl, und dem Glycidylacrylat oder -methacrylat, welches 0,5 bis 40 Gew.-% Bestandteile aus dem Alkylacrylat oder - methacrylat und 0,5 bis 15 Gew.-% der Bestandteile aus dem Glycidylacrylat oder -methacrylat enthält, wobei der Rest aus den aus dem Ethylen stammenden Bestandteilen gebildet wird;

(iii) aus Polyethylenen mit niedriger Dichte, die mit Maleinsäurehydrid gepfropft sind, und Polypropylenen, die mit Maleinsäureanhydrid gepfropft sind, die 0,5 bis 15 Gew.-% gepfropfte Bestandteile aus dem Maleinsäureanhydrid enthalten; und

(iv) aus Polyethylenen mit niedriger Dichte, die mit Glycidylacrylat oder -methacrylat gepfropft sind, und Polypropylenen, die mit Glycidylacrylat oder - methacrylat gepfropft sind, die 0,5 bis 15 Gew.-% gepfropfte Bestandteile aus dem Glycidylderivat enthalten.

**15.** Verfahren nach einem der Ansprüche 8 bis 14, **dadurch gekennzeichnet, dass** die Olefinpolymere mit Epoxy- oder COOH-Gruppen einen Fluiditätsindex, bestimmt nach der Norm ASTM D 1238, einen Wert, ausgedrückt in Gramm pro 10 Minuten haben, der zwischen 0,3 und 3000, vorzugsweise zwischen 0,5 und 900 liegt.

**16.** Verfahren nach einem der Ansprüche 1 bis 15, **dadurch gekennzeichnet, dass** das Bitumen oder Bitumengemisch aus Bitumina ausgewählt ist, die eine kinematische Viskosität bei 100°C zwischen 0,5 x $1^{-4}$ $m^2/s$ und 3 x $10^{-2}$ $m^2/s$, vorzugsweise zwischen 1 x $10^{-4}$ $m^2/s$ und 2 x $10^{-2}$ $m^2/s$ haben.

**17.** Verfahren nach Anspruch 16, **dadurch gekennzeichnet, dass** das Bitumen oder Bitumengemisch ein Eindringvermögen (pénétrabilité) bei 25°C, entsprechend der Norm NF T 66004 zwischen 5 und 800, vorzugsweise zwischen 10 und 400 hat.

**18.** Verfahren nach einem der Ansprüche 1 bis 17, **dadurch gekennzeichnet, dass** man der Bitumen-/Polymerzusammensetzung während ihrer Herstellung ein oder mehrere unterschiedliche Polymere aus Olefinpolymeren mit Epoxy- oder COOH-Gruppen zusetzt, wobei das oder die zusätzlichen Polymere, insbesondere Elastomere darstellen.

**19.** Verfahren nach Anspruch 18, **dadurch gekennzeichnet, dass** das oder die Elastomeren mit Schwefel vernetzbare

Elastomere darstellen.

20. Verfahren nach Anspruch 19, **dadurch gekennzeichnet, dass** die Menge des mit Schwefel vernetzbaren Elastomers 0,3 bis 20%, vorzugsweise 0,5 bis 10%, bezogen auf das Gemisch des Bitumens oder des Bitumengemisches beträgt.

21. Verfahren nach Anspruch 19 oder 20, **dadurch gekennzeichnet, dass** die mit Schwefel vernetzbaren Elastomere statistische Copolymere oder Sequenzen aus Styrol und einem konjugierten Dien darstellen, wobei das Dien insbesondere Butadien, Isopren, Chloropren, carboxyliertes Butadien und carboxyliertes Isopren darstellt.

22. Verfahren nach Anspruch 21, **dadurch gekennzeichnet, dass** das oder die Copolymere des Styrols und des konjugierten Diens 5 bis 50 Gew.-% Styrol enthalten.

23. Verfahren nach Anspruch 21 oder 22, **dadurch gekennzeichnet, dass** die mittlere molekulare Gewichtsmasse des Styrol-Copolymers und des konjugierten Diens zwischen 10000 und 600000 Dalton und vorzugsweise zwischen 30000 und 400000 Dalton liegt.

24. Verfahren nach einem der Ansprüche 19 bis 23, **dadurch gekennzeichnet, dass** die Bitumen/Polymer-Zusammensetzung auf der Basis von Bitumen oder Bitumengemischen, olefinischen Polymeren mit Epoxy- oder COOH-Gruppen und mit Schwefel vernetzbaren Elastomer einer Vernetzungsreaktion unter der Wirkung eines Schwefel abgebenden Kupplungsmittels unterzogen wird, um eine Zusammensetzung aus Bitumen und vernetztem Polymer zu erzeugen.

25. Verfahren nach Anspruch 24, **dadurch gekennzeichnet, dass** die das Schwefel abgebende Kupplungsmittel aus der Gruppe ausgewählt ist, welche durch elementaren Schwefel, Hydrocarbyl-Polyschwefel, Schwefel abgebenden Vulkanisationsbeschleunigern, Mischungen dieser Produkte untereinander und/oder Vulkanisationsbeschleunigern, die keinen Schwefel abgeben, ausgewählt ist.

26. Verfahren nach Anspruch 25, **dadurch gekennzeichnet, dass** das Schwefel abgebende Kupplungsmittel aus den Produkten M, die, bezogen auf das Gewicht, 0% bis 100% einer Verbindung CA enthalten, die aus einem oder mehreren Schwefel abgebenden Vulkanisationsbeschleunigern, und aus 100% bis 0% einer Verbindung CB, die aus einem oder mehreren Vulkanisationsmitteln besteht, die aus elementarem Schwefel und den Hydrocarbyl-Polyschwefeln ausgewählt sind, und den Produkten N ausgewählt ist, die eine Verbindung CC enthält, welche aus einem oder mehreren, keinen Schwefel abgebenden Vulkanisationsbeschleunigern besteht, und aus einem Produkt M, wobei das Gewichtsverhältnis zwischen der Verbindung CC und dem Produkt M 0,01 bis 1 und vorzugsweise 0,05 bis 0,5 beträgt.

27. Verfahren nach einem der Ansprüche 24 bis 26, **dadurch gekennzeichnet, dass** das Kupplungsmittel in einer solchen Menge verwendet wird, dass eine Menge an freiem Schwefel von 0,1% bis 20%, bezogen auf das Gewicht des mit Schwefel vernetzbaren Elastomers in der Bitumen/Polymer-Zusammensetzung, die der Vernetzung unterzogen wird, bereitgestellt wird.

28. Verfahren nach einem der Ansprüche 1 bis 23, **dadurch gekennzeichnet, dass** man die Bitumen/Polymer-Zusammensetzung dadurch herstellt, dass man das oder die Olefin-Polymere mit Epoxy- oder COOH-Gruppen bei Verwendung von einem oder mehreren zusätzlichen Polymeren, beispielsweise von mit Schwefel vernetzbaren Elastomeren, mit den Bitumen oder Bitumengemisch in den gewünschten Anteilen in Berührung bringt, wobei man bei Temperaturen zwischen 100°C und 230°C, insbesondere zwischen 120°C und 190°C unter Rühren während eines Zeitraums von mindestens 10 Minuten, insbesondere von 10 Minuten bis 5 Stunden, arbeitet.

29. Verfahren nach einem der Ansprüche 24 bis 27, **dadurch gekennzeichnet, dass** man die Zusammensetzung aus Bitumen und vernetztem Polymer dadurch herstellt, dass man das oder die Olefinpolymere mit Epoxy- oder COOH-Gruppen und das oder die mit Schwefel vernetzbaren Elastomeren mit den Bitumen oder Bitumengemisch in den gewünschten Anteilen in Berührung bringt, wobei man bei Temperaturen zwischen 100°C und 230°C, insbesondere zwischen 120°C und 190°C und unter Rühren, innerhalb eines Zeitraums von mindestens 10 Minuten, insbesondere von 10 Minuten bis 5 Stunden arbeitet, worauf man dem erhaltenen Produkt, welches die Zusammensetzung aus Bitumen und nicht vernetztem Polymer darstellt, ein Schwefel abgebendes Kupplungsmittel in einer gewünschten Menge zusetzt, worauf man das Ganze unter Rühren bei Temperaturen zwischen 100°C und 230°C, insbesondere zwischen 120°C und 190°C über einen Zeitraum von mindestens 10 Minuten, insbesondere

von 10 Minuten bis 5 Stunden, besonders bevorzugt zwischen 10 Minuten und 3 Stunden hält, um eine Reaktionsmasse zu bilden, die die Zusammensetzung aus Bitumen und vernetztem Polymer darstellt.

**30.** Verfahren nach Anspruch 28 oder 29, **dadurch gekennzeichnet, dass** man saure Hilfsmittel in einer gewünschten Menge der Zusammensetzung aus Bitumen und noch nicht vernetztem Polymer zusetzt, dieses vernetzt, indem man bei Temperaturen zwischen 100°C und 230°C, insbesondere zwischen 120°C und 190°C unter Rühren arbeitet, worauf man das Ganze bei Temperaturen zwischen 100 und 230°C, insbesondere zwischen 120°C und 190°C unter Rühren über einen Zeitraum von mindestens 10 Minuten, insbesondere von 10 Minuten bis 5 Stunden, besonders bevorzugt zwischen 30 Minuten und 4 Stunden hält, um die Zusammensetzung aus Bitumen und Polymer mit sehr geringer thermischer Empfindlichkeit zu erhalten.

**31.** Verfahren nach einem der Ansprüche 28 bis 30, **dadurch gekennzeichnet**, **dadurch gekennzeichnet, dass** man der Zusammensetzung aus Bitumen und vernetztem Polymer oder der Zusammensetzung aus Bitumen und nicht vernetztem Polymer im Laufe ihrer Bildung, die man anschließend der Wirkung eines sauren Zusatzmittels aussetzt, anschließend 1% bis 40% und mehr, insbesondere 2% bis 30% (bezogen auf das Gewicht des Bitumens) eines Flussmittels zusetzt.

**32.** Verfahren nach Anspruch 31, **dadurch gekennzeichnet, dass** das Fließmittel ein Kohlenwasserstofföl darstellt, das einen Destillationsbereich bei Atmosphärendruck, bestimmt nach der Norm ASTM D 86-67, zwischen 100°C und 600°C, insbesondere zwischen 150°C und 400°C hat, wobei das Kohlenwasserstofföl insbesondere einen Petroleumschnitt mit aromatischem Charakter, einen Petroleumschnitt mit naphtenisch - aromatischen Charakter, einen Petroleumschnitt mit naphtenisch-parafinischem Charakter, einen Petroleumschnitt mit parafinischem Charakter, ein Öl aus Kohle und ein Öl pflanzlichen Ursprungs darstellt.

**33.** Verfahren nach Anspruch 32, **dadurch gekennzeichnet, dass** man das oder die Olefinpolymere mit Epoxy- oder COOH-Gruppen und gegebenenfalls das oder die zusätzlichen Polymeren und das Kupplungsmittel im Bitumen oder Bitumengemisch in Form einer Mutterlösung dieser Produkte in einem Kohlenwasserstofföl, welches das Fließmittel darstellt, zusetzt.

**34.** Verfahren nach Anspruch 33, **dadurch gekennzeichnet, dass** die Mutterlösung, bezogen auf das Kohlenwasserstofföl, 1% bis 20% des oder der Olefinpolymere mit Epoxy- oder COOH-Gruppen und gegebenenfalls 5% bis 30% zusätzliche(s) Polymer(e) und 0,005% bis 6% Kupplungsmittel enthält.

**35.** Verfahren nach Anspruch 33 oder 34, **dadurch gekennzeichnet, dass** man die Mutterlösung mit dem Bitumen oder Bitumengemisch vermischt, indem man bei Temperaturen zwischen 100°C und 230°C, insbesondere zwischen 120°C und 190°C unter Rühren arbeitet, worauf man das erhaltene Gemisch unter Rühren auf diesen Temperaturen zwischen 100°C und 230°C, insbesondere zwischen 120°C und 190°C, über einen Zeitraum von mindestens 10 min., insbesondere von 10 min. bis 2 Std. hält, um die Bitumen/Polymer-Zusammensetzung zu erhalten.

**36.** Verfahren nach einem der Ansprüche 1 bis 35, **dadurch gekennzeichnet, dass** man die Zusammensetzung aus Bitumen und dem nicht vernetztem Polymer oder dem vernetztem Polymer im Laufe ihrer Herstellung mit einem sauren Hilfsmittel behandelt und ein oder mehrere Zusätze beifügt, die in der Lage sind, mit den funktionellen Gruppen des oder der Olefinpolymeren, nämlich der Epoxy- oder COOH-Gruppen, die darin enthalten sind, zu reagieren, wobei die reaktiven Zusätze insbesondere Amine, speziell primäre oder sekundäre Polyamine, Alkohole, insbesondere Polyole, Säuren, insbesondere Polysäuren oder Metallsalze, insbesondere aus Metallen der Gruppen I, II, III und VIII des Periodensystems der Elemente darstellen.

**37.** Verfahren nach Anspruch 36, **dadurch gekennzeichnet, dass** die Menge des reaktiven Zusatzes oder der reaktiven Zusätze die dem Reaktionsmedium zugesetzt werden 0,01% bis 10% und vorzugsweise 0,05% bis 5%, bezogen auf das Gewicht des Bitumens oder Bitumengemisches, beträgt.

**38.** Anwendung der Bitumen/Polymer-Zusammensetzung, erhalten nach dem Verfahren nach einem der Ansprüche 1 bis 37, zur Herstellung von Bitumen/Polymer-Bindemitteln, wobei diese Bindemittel aus diesen Zusammensetzungen als solchen bestehen oder durch Verdünnung mit anderen Bitumen/Polymer-Zusammensetzungen, erhalten nach dem Verfahren nach einem der Ansprüche 1 bis 27 mit einem geringeren Gesamtgehalt an Polymeren gebildet sind, wobei die Bitumen/Polymer-Bindemittel insbesondere direkt oder als wässriger Emulsion zur Herstellung von Überzügen, insbesondere von Straßendecken mit oberflächlichem Überzug, zur Herstellung von

Überzügen, die in der Hitze oder in der Kälte aufgebracht werden, oder für die Herstellung von Dichtungsüberzügen verwendet werden.

## Claims

1. Method for preparing bitumen/polymer compositions exhibiting, *inter alia*, very low sensitivity to heat, **characterised in that** a bitumen or mixture of bitumens is brought into contact with 0.01% to 20%, by weight of the bitumen or mixture of bitumens, of at least one olefin polymer carrying epoxy or COOH functional groups, the process being carried out at temperatures between 100°C and 230°C, while stirring, for a period of at least 10 minutes, in order to form a reaction product known as a bitumen/polymer component, said method being **characterised in that** 0.005% to 6%, by weight of the bitumen or mixture of bitumens, of an acidic adjuvant is incorporated in the bitumen/polymer component, and the reaction medium thus formed is maintained at temperatures between 100°C and 230°C, while stirring, for a period of at least 10 minutes, in order to produce the bitumen/polymer composition, said acidic adjuvant being composed of one or more compounds selected from the group consisting of phosphoric acids, boric acids, sulphuric acid, the anhydrides of said acids, chlorosulphuric acid, polyphosphoric acids, phosphonic acids having the formula

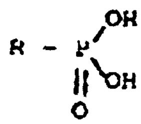

and acids having the formula R-$(COO)_t$-$SO_3H$, where, in said formulae, t has a value of zero or one, and R denotes a monovalent hydrocarbon radical selected from the group consisting of $C_1$ to $C_6$ acyclic monovalent hydrocarbon radicals and cyclic monovalent hydrocarbon radicals containing 4 to 12 cyclic carbon atoms and optionally substituted by $C_1$ to $C_{16}$ acyclic monovalent hydrocarbon radicals.

2. Method according to claim 1, **characterised in that** the total amount of acidic adjuvant incorporated in the bitumen/polymer component represents 0.01% to 3% by weight of the bitumen or mixture of bitumens.

3. Method according to either of claims 1 and 2, **characterised in that** the acidic adjuvant is selected from the group consisting of $H_3PO_4$, $P_2O_5$, $H_3BO_3$, $B_2O_3$, $H_2SO_4$, $SO_3$, $HSO_3Cl$, polyphosphoric acids, mixtures of at least one polyphosphoric acid and of sulphuric acid, mixtures of at least one polyphosphoric acid and of at least one acid R-$(COO)_t$-$SO_3H$, mixtures of sulphuric acid and of at least one acid R-$(COO)_t$-$SO_3H$, and mixtures of sulphuric acid with at least one polyphosphoric acid and at least one acid R-$(COO)_t$-$SO_3H$.

4. Method according to claim 3, **characterised in that** the acidic adjuvant consists of a combination comprising, by weight, from 20% to 95% and more particularly from 40% to 90% of one or more polyphosphoric acids and from 80% to 5% and more particularly from 60% to 10% of sulphuric acid and/or of methane sulphonic acid.

5. Method according to any one of claims 1 to 4, **characterised in that** polyphosphoric acids are compounds having the formula $P_qH_rO_s$, where q, r and s are positive numbers, such that $q \geq 2$ and in particular is from 3 to 20, and that $5q + r - 2s = 0$, said polyphosphoric acids having, in particular, the formula

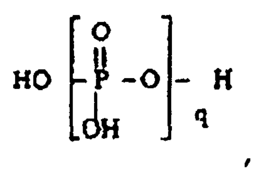

q having the meaning given above.

6. Method according to any one of claims 1 to 3, **characterised in that** the acids R-$(COO)_t$-$SO_3H$ are such that R is

a linear or branched $C_1$ to $C_{16}$ alkyl radical, a $C_4$ to $C_{12}$ and more particularly $C_5$ to $C_8$ cycloalkyl radical, or alternatively a monovalent aromatic radical having 6 cyclic atoms, and which can optionally be substituted by a linear or branched $C_1$ to $C_{16}$ alkyl radical.

**7.** Method according to any one of claims 1 to 6, **characterised in that** the amount of olefin polymer carrying epoxy or COOH functional groups that is brought into contact with the bitumen or mixture of bitumens in order to form the bitumen/polymer component represents 0.05% to 10% and more particularly 0.1% to 6% of the weight of bitumen or mixture of bitumens.

**8.** Method according to any one of claims 1 to 7, **characterised in that** the olefin polymer carrying epoxy or COOH groups is selected from copolymers containing, by weight, x% of units resulting from ethylene or from propylene, y% of units resulting from one or more monomers A having the formula

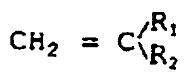
,

z% of units resulting from at least one monomer B having the formula

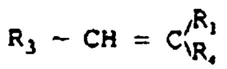
,

and v% of units resulting from one or more monomers C that are different from monomers A and B, where, in these formulae, $R_1$ denotes H, $CH_3$ or $C_2H_5$, $R_2$ represents a $-COOR_5$, $-OR_5$ or $-OOCR_6$ radical, where R5 denotes a $C_1$ to $C_{10}$, preferably $C_1$ to $C_6$ alkyl radical, and $R_6$ represents H or a $C_1$ to $C_3$ alkyl radical, $R_3$ denotes H, COOH or $COOR_5$, $R_5$ having the aforementioned definition, and $R_4$ denotes a -COOH,

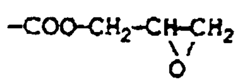
or
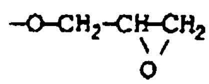

radical, and x, y, z and v are numbers such that $40 \leq x \leq 99.9$, $0 \leq y \leq 50$, $0.1 \leq z \leq 20$, and $0 \leq v \leq 15$, where $x + y + z + v = 100$.

**9.** Method according to claim 8, **characterised in that**, in the olefin polymer with epoxy or COOH groups, x, y, z and v are such that $50 \leq x \leq 99.5$, $0 \leq y \leq 40$, $0.5 \leq z \leq 15$, and $0 \leq v \leq 10$, where $x + y + z + v = 100$.

**10.** Method according to either of claims 8 and 9, **characterised in that** the monomers A are selected from the group consisting of vinyl formiate, vinyl acetate, vinyl propionate, vinyl butyrate, $CH_2 = CH\text{-}O\text{-}R_5$ vinyl ethers, alkyl acrylates having the formula $CH_2 = CH\text{-}COOR_5$, and alkyl methacrylates having the formula

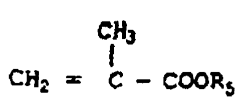
,

$R_5$ being a $C_1$ to $C_{10}$, preferably $C_1$ to $C_6$ alkyl radical, in particular methyl, ethyl, propyl or butyl.

**11.** Method according to any one of claims 8 to 10, **characterised in that** the monomers B are selected from the group consisting of maleic acid and the anhydride thereof, acrylic acid, methacrylic acid, alkyl acid maleates having the formula $HOOC\text{-}CH = CH\text{-}COOR_7$, where $R_7$ is a $C_1$ to $C_6$ alkyl radical, glycidyl acrylate, glycidyl methacrylate and glycidyl vinyl ether.

**12.** Method according to any one of claims 8 to 11, **characterised in that** the monomers C are selected from the group consisting of CO, $SO_2$ and acrylonitrile.

**13.** Method according to any one of claims 8 to 11, **characterised in that** the olefin polymers with epoxy or COOH groups are selected from the group consisting of:

(a) random copolymers of ethylene and of a monomer B selected from the group consisting of acrylic acid, methacrylic acid, maleic acid or the anhydride thereof, glycidyl acrylate and glycidyl methacrylate, which contain 80% to 99.7%, preferably 85% to 99.5%, by weight of ethylene;

(b) random terpolymers of ethylene, of a monomer A selected from the group consisting of vinyl acetate and alkyl acrylates or methacrylates containing a $C_1$ to $C_6$ alkyl residue, such as methyl, ethyl, propyl, butyl or hexyl, and of a monomer B selected from the group consisting of acrylic acid, methacrylic acid, maleic acid or the anhydride thereof, glycidyl acrylate and glycidyl methacrylate, which contain 0.5% to 40% by weight of units resulting from the monomer A and 0.5% to 15% by weight of units resulting from the monomer B, the remainder being formed by units resulting from ethylene; and

(c) copolymers obtained by grafting a monomer B, selected from acrylic acid, methacrylic acid, maleic acid or the anhydride thereof, glycidyl acrylate and glycidyl methacrylate, on a substrate composed of a polymer selected from the group consisting of polyethylenes, in particular low-density polyethylenes, polypropylenes and random copolymers of ethylene and of vinyl acetate, or of ethylene and of alkyl acrylate or methacrylate containing a $C_1$ to $C_6$ alkyl residue, such as methyl, ethyl, propyl, butyl or hexyl, which random copolymers contain 40% to 99.7%, preferably 50% to 99%, by weight of ethylene, said grafted copolymers containing 0.5% to 15% by weight of grafted units obtained from the monomer B.

**14.** Method according to claim 13, **characterised in that** the olefin polymers with epoxy or COOH groups are selected from:

(i) random terpolymers of ethylene, of alkyl acrylate or methacrylate containing a $C_1$ to $C_6$ alkyl residue, such as methyl, ethyl or butyl, and of maleic anhydride, which contain 0.5% to 40% by weight of units resulting from alkyl acrylate or methacrylate and 0.5% to 15% by weight of units resulting from maleic anhydride, the remainder being formed by units resulting from ethylene;

(ii) random terpolymers of ethylene, of alkyl acrylate or methacrylate containing a $C_1$ to $C_6$ alkyl residue, such as methyl, ethyl or butyl, and of glycidyl acrylate or methacrylate, which contain 0.5% to 40% by weight of units resulting from alkyl acrylate or methacrylate and 0.5% to 15% by weight of units resulting from glycidyl acrylate or methacrylate, the remainder being formed by units resulting from ethylene;

(iii) low-density polyethylenes grafted with maleic anhydride and polypropylenes grafted with maleic anhydride, which contain 0.5% to 15% by weight of grafted units resulting from maleic anhydride;

(iv) low-density polyethylenes grafted with glycidyl acrylate or methacrylate and polypropylenes grafted with glycidyl acrylate or methacrylate, which contain 0.5% to 15% by weight of grafted units resulting from the glycidyl derivative.

**15.** Method according to any one of claims 8 to 14, **characterised in that** the olefin polymers with epoxy or COOH groups have a melt flow index, determined according to ASTM Standard D 1238, having a value expressed in grams per 10 minutes between 0.3 and 3000, preferably between 0.5 and 900.

**16.** Method according to any one of claims 1 to 15, **characterised in that** the bitumen or mixture of bitumens is selected from bitumens having a kinematic viscosity at 100 °C between $0.5 \times 10^{-4}$ $m^2/s$ and $3 \times 10^{-2}$ $m^2/s$, preferably between $1 \times 10^{-4}$ $m^2/s$ and $2 \times 10^{-2}$ $m^2/s$.

**17.** Method according to claim 16, **characterised in that** the bitumen or mixture of bitumens has a penetrability at 25 °C, defined according to NF Standard T 66004, between 5 and 800, preferably between 10 and 400.

**18.** Method according to any one of claims 1 to 17, **characterised in that** one or more additional polymers other than the olefin polymers with epoxy or COOH groups are incorporated in the bitumen/polymer component during its

preparation, said additional polymer or polymers being, in particular, elastomers.

**19.** Method according to claim 18, **characterised in that** said elastomer or elastomers are sulphur-crosslinkable elastomers.

**20.** Method according to claim 19, **characterised in that** the amount of sulphur-crosslinkable elastomer represents between 0.3% and 20%, preferably between 0.5% and 10% of the weight of the bitumen or mixture of bitumens.

**21.** Method according to either of claims 19 and 20, **characterised in that** the sulphur-crosslinkable elastomers are random copolymers or block copolymers of styrene and of a conjugated diene, said diene being, in particular, a substance such as butadiene, isoprene, chloroprene, carboxylated butadiene and carboxylated isoprene.

**22.** Method according to claim 21, **characterised in that** the copolymers of styrene and of conjugated diene contain 5% to 50% by weight of styrene.

**23.** Method according to either of claims 21 and 22, **characterised in that** the average molecular mass, by weight of the copolymer of styrene and of conjugated diene, is between 10,000 and 600,000 daltons, preferably between 30,000 and 40,000 daltons.

**24.** Method according to any one of claims 19 to 23, **characterised in that** the bitumen/polymer component, based on bitumen or a mixture of bitumens, on olefin polymer with epoxy or COOH groups, and on sulphur-crosslinkable elastomer, is subjected to crosslinking under the action of a sulphur-donor coupling agent, in order to produce a crosslinked bitumen/polymer component.

**25.** Method according to claim 24, **characterised in that** the sulphur-donor coupling agent is selected from the group consisting of elemental sulphur, hydrocarbyl polysulphides, sulphur-donor vulcanisation accelerators, the mixtures of such products with one another and/or with vulcanisation accelerators which are not sulphur donors.

**26.** Method according to claim 25, **characterised in that** the sulphur-donor coupling agent is selected from the group consisting of the products M, which contain from 0% to 100% by weight of a component CA composed of one or more sulphur-donor vulcanisation accelerators and from 100% to 0% by weight of a component CB composed of one or more vulcanisation agents selected from elemental sulphur and hydrocarbyl polysulphides, and the products N, which contain a component CC composed of one or more vulcanisation accelerators which are not sulphur donors, and a product M in a ratio by weight of the component CC to the product M ranging from 0.01 to 1, preferably from 0.05 to 0.5.

**27.** Method according to any one of claims 24 to 26, **characterised in that** the coupling agent is used in an amount appropriate for providing an amount of free sulphur representing 0.1% to 20% of the weight of sulphur-crosslinkable elastomer in the bitumen/polymer component subjected to crosslinking.

**28.** Method according to any one of claims 1 to 23, **characterised in that** the bitumen/polymer component is prepared by bringing the olefin polymer or polymers carrying epoxy or COOH groups and, in the event of use, the additional polymer or polymers, for example, sulphur-crosslinkable elastomer, into contact with the bitumen or mixture of bitumens, in the desired proportions, the process being carried out at temperatures between 100°C and 230°C, more particularly between 120°C and 190°C, while stirring, for a period of at least 10 minutes and more particularly from 10 minutes to 5 hours.

**29.** Method according to any one of claims 24 to 27, **characterised in that** the crosslinked bitumen/polymer component is prepared by bringing the olefin polymer or polymers carrying epoxy or COOH groups and the sulphur-crosslinkable elastomer or elastomers into contact with the bitumen or mixture of bitumens, in the desired proportions, the process being carried out at temperatures between 100°C and 230°C, more particularly between 120°C and 190°C, while stirring, for a period of at least 10 minutes and more particularly from 10 minutes to 5 hours, the sulphur-donor coupling agent then being incorporated, in the desired amount, in the obtained product, which constitutes the non-crosslinked bitumen/polymer component, the whole mixture being maintained, while stirring, at temperatures between 100°C and 230°C, more particularly between 120°C and 190°C, for a period of at least 10 minutes, in particular ranging from 10 minutes to 5 hours, and more particularly from 10 minutes to 3 hours, to form a reaction mass constituting the crosslinked bitumen/polymer component.

**30.** Method according to either of claims 28 and 29, **characterised in that** the acidic adjuvant is incorporated, in the desired amount, in the non-crosslinked or crosslinked bitumen/polymer component, the process being carried out at temperatures between 100°C and 230°C, more particularly between 120°C and 190°C, while stirring, the whole mixture then being maintained, while stirring, at temperatures between 100°C and 230°C, more particularly between 120°C and 190°C, for a period of least 10 minutes, in particular from 10 minutes to 5 hours, and more particularly from 30 minutes to 4 hours, to produce the bitumen/polymer composition with very low susceptibility to temperature.

**31.** Method according to any one of claims 28 to 30, **characterised in that**, during its formation, the cross-linked bitumen/polymer component or the non-crosslinked bitumen/polymer component, which is subsequently subjected to the action of the acidic adjuvant, has added to it 1% to 40% and more particularly 2% to 30%, by weight of the bitumen, of a fluxing agent.

**32.** Method according to claim 31, **characterised in that** the fluxing agent is composed of a hydrocarbon oil having an atmospheric pressure distillation range, determined according to ASTM Standard D 86-67, between 100°C and 600°C, and located more particularly between 150°C and 400°C, said hydrocarbon oil being, in particular, a petroleum cut of an aromatic nature, a petroleum cut of a naphthene-aromatic nature, a petroleum cut of a naphthene-paraffinic nature, a petroleum cut of a paraffinic nature, a coal oil or alternatively an oil of vegetable origin.

**33.** Method according to claim 32, **characterised in that** the olefin polymer or polymers carrying epoxy or COOH groups and, if they are present, the additional polymer or polymers and the coupling agent are incorporated in the bitumen or mixture of bitumens in the form of a mother solution of these products in the hydrocarbon oil constituting the fluxing agent.

**34.** Method according to claim 33, **characterised in that** the mother solution contains, by weight of the hydrocarbon oil, 1% to 20% of the olefin polymer or polymers with epoxy or COOH groups and, in the event of use, 5% to 30% of the additional polymer or polymers and 0.005% to 6% of coupling agent.

**35.** Method according to either of claims 33 and 34, **characterised in that** the mother solution is mixed with the bitumen or mixture of bitumens, the process being carried out at temperatures between 100°C and 230°C, more particularly between 120°C and 190°C, while stirring, the resulting mixture then being maintained, while stirring, at temperatures between 100°C and 230°C, more particularly between 120°C and 190°C, for a period of at least 10 minutes, and more particularly ranging from 10 minutes to 2 hours, to produce the bitumen/polymer component.

**36.** Method according to any one of claims 1 to 35, **characterised in that**, during its preparation, the bitumen/polymer component of the crosslinked or non-crosslinked type, which is subjected to treatment with the acidic adjuvant, has added to it one or more additives capable of reacting with the functional groups of the olefin polymer or polymers with epoxy or COOH groups which the component contains, said reactive additives being, in particular, amines, especially primary or secondary polyamines, alcohols, especially polyols, acids, especially polyacids, or alternatively metallic salts, especially compounds of metals from groups I, II, III, or VIII of the Periodic Table of Elements.

**37.** Method according to claim 36, **characterised in that** the amount of reactive additive or of reactive additives incorporated in the reaction mixture giving rise to the bitumen/polymer component represents 0.01% to 10%, preferably 0.05% to 5% of the weight of the bitumen or mixture of bitumens.

**38.** Application of the bitumen/polymer compositions obtained by the method according to any one of claims 1 to 37 to the production of bitumen/polymer binders, said binders consisting of said compositions used as they are, or alternatively being formed by dilution of said bitumen/polymer compositions by a bitumen or mixture of bitumens, or by a bitumen/polymer composition obtained by the method according to any one of claims 1 to 37, with lower overall polymer content, it being possible, in particular, to use said bitumen/polymer binders, directly or after being placed in an aqueous emulsion, to make coatings, especially coatings for road surfacing, to produce pre-mixes to be laid hot or cold, or alternatively to make impervious coatings.